(19) Europäisches Patentamt
European Patent Office
Office européen des brevets

(11) **EP 4 757 339 A1**

(12) **EUROPEAN PATENT APPLICATION**
published in accordance with Art. 153(4) EPC

(43) Date of publication:
**10.06.2026   Bulletin 2026/24**

(21) Application number: **24849074.0**

(22) Date of filing: **26.07.2024**

(51) International Patent Classification (IPC):
**H04N 25/77** (2023.01)        **H04N 25/707** (2023.01)
**H04N 25/773** (2023.01)

(52) Cooperative Patent Classification (CPC):
**H04N 25/707; H04N 25/77; H04N 25/773**

(86) International application number:
**PCT/JP2024/026730**

(87) International publication number:
**WO 2025/028420 (06.02.2025 Gazette 2025/06)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.07.2023   JP 2023123703
16.07.2024   JP 2024113102**

(71) Applicant: **Canon Kabushiki Kaisha
Tokyo, 146-8501 (JP)**

(72) Inventors:
• **YOSHIDA Takayuki
Tokyo 146-8501 (JP)**
• **HAYASHI Hidetoshi
Tokyo 146-8501 (JP)**

(74) Representative: **Canon Europe Limited
European Intellectual Property Group
4 Roundwood Avenue
Stockley Park
Uxbridge UB11 1AF (GB)**

(54) **PHOTOELECTRIC CONVERSION DEVICE, AND APPARATUS**

(57)     A photoelectric conversion apparatus includes an avalanche photodiode, and an integration circuit configured to integrate an output signal from the avalanche photodiode by predetermined weighting corresponding to acquisition of an optical flow.

**FIG.6**

**Description**

Technical Field

The present disclosure relates to a photoelectric conversion apparatus and equipment including the photoelectric conversion apparatus.

Background Art

A time-correlation image sensor is known as one type of image capturing sensors.

Non-Patent Literature 1 describes a structure in which a correlation detection structure is embedded in pixels as a time-correlation image sensor. Provision of this structure makes it possible to detect time-varying patterns with a wider bandwidth than a frame rate. As this correlation detection structure, a structure provided with a photodiode that generates a photocurrent and a plurality of capacitors that accumulates this photocurrent is described.

Citation List

Non-Patent Literature

Non-Patent Literature 1: Shigeru Ando and Akira Kimachi, "Time Correlation Imaging and Its Applications", Journal E of the Institute of Electrical Engineers of Japan, Vol. 129, No. 5, May 1, 2009, pp. 129-137

Summary of Invention

Technical Problem

The structure described in Non-Patent Literature 1 has an issue with performing correlation detection with a higher time resolution.

Solution to Problem

According to a technique of the present disclosure, a photoelectric conversion apparatus includes an avalanche photodiode, and an integration circuit configured to integrate an output signal from the avalanche photodiode by predetermined weighting corresponding to acquisition of an optical flow.

According to an another technique of the present disclosure, a photoelectric conversion apparatus includes an avalanche photodiode, a first integration circuit configured to integrate an output signal from the avalanche photodiode, and a second integration circuit configured to integrate the output signal, wherein a weighting amount used for integration of the output signal by the first integration circuit is different from a weighting amount used for integration of the output signal by the second integration circuit.

Advantageous Effects of invention

The technique according to the present disclosure makes it possible to perform correlation detection with a higher time resolution.

Brief Description of Drawings

[Fig. 1] Fig. 1 is a diagram illustrating a configuration of a photoelectric conversion apparatus.

[Fig. 2] Fig. 2 is a graph illustrating a relationship among a main frame, a subframe, and a weighting amount.

[Fig. 3] Fig. 3 is a diagram illustrating a configuration of a pixel.

[Fig. 4] Fig. 4 is a diagram illustrating a structure of a stacked sensor.

[Figs. 5] Figs. 5 illustrate a configuration and operation of a pixel including an avalanche photodiode.

[Fig. 6] Fig. 6 is a diagram illustrating a configuration of the pixel.

[Fig. 7] Fig. 7 is a diagram illustrating a configuration of the pixel.

[Fig. 8] Fig. 8 is a diagram illustrating a configuration of the pixel.

[Fig. 9] Fig. 9 is a diagram illustrating a configuration of the pixel.

[Fig. 10] Fig. 10 is a diagram illustrating a configuration of a photoelectric conversion apparatus.

[Fig. 11] Fig. 11 is a timing diagram illustrating a driving operation of the pixel.

[Fig. 12] Fig. 12 is a diagram illustrating a configuration of a weight control unit.

[Fig. 13] Fig. 13 is a timing diagram illustrating a driving operation of the weight control unit.

[Fig. 14] Fig. 14 is a diagram illustrating a configuration of the weight control unit.

[Fig. 15A] Fig. 15A is a timing diagram illustrating a driving operation of the weight control unit.

[Fig. 15B] Fig. 15B is a timing diagram illustrating a driving operation of the weight control unit.

[Fig. 16] Fig. 16 is a diagram illustrating a configuration of the weight control unit.

[Fig. 17A] Fig. 17A is a timing diagram illustrating a driving operation of the weight control unit.

[Fig. 17B] Fig. 17B is a timing diagram illustrating a driving operation of the weight control unit.

[Fig. 18A] Fig. 18A is a diagram illustrating a relationship between a memory configuration within the weight control unit and a weighting amount.

[Fig. 18B] Fig. 18B is a diagram illustrating a relationship between the memory configuration within the weight control unit and the weighting amount.

[Fig. 19A] Fig. 19A is a diagram illustrating a configuration of equipment.

[Fig. 19B] Fig. 19B is a diagram illustrating the configuration of the equipment.

[Fig. 19C] Fig. 19C is a diagram illustrating the configuration of the equipment. Description of Embodiments

Embodiments will be described below with reference to the drawings.

In the following embodiments, an image capturing apparatus will be mainly described as an example of a photoelectric conversion apparatus. The following embodiments are not limited only to an image capturing apparatus and can also be applied to other examples of the photoelectric conversion apparatus. Other examples of the photoelectric conversion apparatus include a ranging apparatus (apparatus for distance measurement and the like using focus detection or Time Of Flight (TOF)) and a photometric apparatus (apparatus for measurement of the amount of incident light and the like).

The conductivity type of each transistor described in the following embodiments is an example, and the conductivity type is not limited only to the conductivity type described in the embodiments. The conductivity type can appropriately be changed from the conductivity type described in the embodiments, and the potentials of a gate, a source, and a drain of the transistor are appropriately changed with this change.

For example, in the case of a transistor that operates as a switch, the low level and the high level of the potential supplied to the gate described in the embodiments may be reversed along with the change of the conductivity type. In addition, the conductivity type of a semiconductor region described in the embodiments described below is an example, and the conductivity type is not limited only to the conductivity type described in the embodiments. The conductivity type described in the embodiments can appropriately be changed, and the potential of the semiconductor region is appropriately changed with this change.

In addition, in the following embodiments, connection between elements of a circuit may be described. In this case, even in a case where another element is interposed between the elements of interest, the elements of interest are treated as being connected to each other unless otherwise specified. For example, it is assumed that an element A is connected to one node of a capacitive element C having a plurality of nodes, and an element B is connected to another node thereof. Even in such a case, the element A and the element B are treated as being connected unless otherwise specified.

(First Embodiment)

A first embodiment will be described with reference to the drawings.

A sensor for performing time correlation imaging may include a photodiode and a configuration for sorting signals output from the photodiode. This sorting of signals for each pixel to generate an image can be represented by the following Equation (1).

[Equation 1]

$$\left( v \cdot \nabla + \frac{\partial}{\partial t} \right) f(x, y, t) = 0 \qquad (1)$$

In Equation (1), f (x, y, t) represents the brightness of a pixel (x, y) at time t, and v represents the velocity of the pixel (x, y).

It is assumed that an exposure time for acquiring an image of one frame is represented by T. An image g (x, y) can be represented by the following Equation (2).

[Equation 2]

$$g_n(x, y) = \int_0^T f(x, y, t) \cdot e^{-in\Delta_\omega t} dt, \quad \Delta_\omega = \frac{2\pi}{T} \qquad (2)$$

As shown in Equation (2), the image has a calculated value obtained by multiplying the brightness f (x, y, g) by a complex reference signal $e^{-in\Delta wt}$ to calculate the integral of one frame time. It is assumed that a captured image g (x, y) satisfies following Equation (3).

[Equation 3]

$$v \cdot \nabla g_n(x, y) + \left[ f(x, y, t) \right]_0^T + i \cdot n \cdot \Delta_\omega g_n(x, y) = 0, \forall n = 0, 1, 2 \cdots \qquad (3)$$

The second term in Equation (3) is an integral boundary value. Since Equation (3) forms a simultaneous equation, the integral boundary value can be eliminated by solving the simultaneous equation using, for example, two images g0 (x, y) and g1 (x, y). A time-correlation image sensor can output an intensity image g0 (x, y) consisting only of a real part, and a real part and an imaginary part of a complex correlation image gn (x, y) (hereinafter, the complex correlation image is also referred to as a time correlation signal). Accordingly, the velocity v at each pixel, that is, the optical flow, can be obtained by substituting a sensor detection result into the simultaneous equation of Equation (3) and solving the equation.

In the time-correlation image sensor, it is necessary to calculate the integral of one frame time as shown in Equation (2). Therefore, the output timing of the correlation image is limited to one frame time unit. In the time-correlation image sensor, the cycle of the reference signal and the release time of the shutter are matched. Therefore, the output of the correlation image is performed at the cycle timing of the release time of the shutter.

An outline of an event-based sensor will now be described.

The event-based sensor detects a luminance change within an imaging range and outputs an event signal each time an event is detected. The event-based sensor includes, for example, a plurality of pixels arranged in a matrix shape. The event signal is a signal associated with an event. The event is a luminance change of a pixel. The event signal includes, for example, a detection time at which the event is detected, a pixel position at which the event has occurred, and a change in the pixel value. The time at which the event is detected may be measured based on an internal clock (event camera time) of the event-based sensor.

The criteria for the time at which the event is detected can be reset as necessary. A change in the pixel value is, for example, a change in luminance. The change in the pixel value may be the change amount itself or information indicating whether the luminance change is positive or negative.

The event-based sensor outputs the event signal only when a luminance change occurs. In other words, the event-based sensor outputs the event signal asynchronously. The asynchronous output described herein means that output is temporally independently performed per pixel.

An operation of the event-based sensor is expressed by the following Equation (4).

[Equation 4]

$$Y(x, y, t) = Y(x, y, t_0) + \Delta Y \sum_i \int_{t_0}^{t} ds \delta(s - s_i) \cdot p(x, y, s_i) \qquad (4)$$

Y (x, y, t) represents an image at time t. Time t0 is the time at the start of measurement. The image Y (x, y, t0) is an initial image stored at time t0. Generally, the image Y (x, y, t0) can be set to "0". $\Delta$Y represents a threshold of event occurrence (absolute value of luminance change). p (x, y, si) represents an i-th event signal that has occurred at a pixel (x, y), and p (x, y, si) = $\pm$1 holds.

The event-based sensor can be provided with a function of outputting a time correlation signal, as in the time-correlation image sensor. When the time t is set to the end point of a frame, a signal of the time-correlation image sensor can be expressed as following Equations (5) to (7) with the angular velocity $\omega$ = 2$\pi$/T.

[Equation 5]

$$g_0(x, y, t) = \int_{t-T}^{t} f(x, y, s) ds \qquad (5)$$

$$\mathrm{Re}\, g_1(x, y, t) = \int_{t-T}^{t} \cos(\omega(s - t)) f(x, y, s) ds \qquad (6)$$

$$\mathrm{Im}\, g_1(x, y, t) = \int_{t-T}^{t} \sin(\omega(s - t)) f(x, y, s) ds \qquad (7)$$

The time-correlation image sensor expresses luminance by accumulating a current output from the photodiode in the capacitor. On the other hand, the event-based sensor expresses luminance a change in the current from the photodiode by quantizing it. Accordingly, in the event-based sensor, the current from the photodiode at time s can be divided into a term having a constant value during a measurement period and a displacement term therefrom as shown in the following Equation (8)

[Equation 6]

$$f(x, y, s) = f(x, y, t - T) + \delta f(x, y, s) \qquad (8)$$

Considering the properties of the reference signal, the following Equations (9) and (10) are satisfied.

[Equation 7]

$$\int_{t-T}^{t} \cos(\omega \cdot s) ds = 0 \qquad (9)$$

$$\int_{t-T}^{t} \sin(\omega \cdot s) ds = 0 \qquad (10)$$

Equations (5) to (7) can be rewritten into equations having a constant term and a displacement term by using the relations of Equations (9) and (10).

Thus, Equations (5) to (7) can be expressed as the following Equations (11) to (13).

[Equation 8]

$$g_0(x,y,t) = Y(x,y,t-T) + \int_{t-T}^{t} \delta f(x,y,s)ds \qquad (11)$$

$$\operatorname{Re} g_1(x,y,t) = \int_{t-T}^{t} \cos(\omega(s-t))f(x,y,s)ds \qquad (12)$$

$$\operatorname{Im} g_1(x,y,t) = \int_{t-T}^{t} \sin(\omega(s-t))f(x,y,s)ds \qquad (13)$$

In the event-based sensor, the current output from the photodiode of the time-correlation image sensor is converted into an event signal of the event-based sensor as shown in the following Equation (14).

[Equation 9]

$$\delta f(x,y,s) \rightarrow \Delta Y \sum_i \delta(s-s_i) \cdot p(x,y,s_i) \qquad (14)$$

Equations (11) to (13) can be transformed into the following Equations (15) to (17).

[Equation 10]

$$g_0(x,y,t) = Y(x,y,t-T) + \Delta Y \int_{t-T}^{t} \delta(s-s_i) \cdot p(s,y,s_i)ds \qquad (15)$$

$$\operatorname{Re} g_1(x,y,t) = \Delta Y \int_{t-T}^{t} \cos(\omega(s-t)) \sum_i \delta(s-s_i) \cdot p(x,y,s_i)ds \qquad (16)$$

$$\operatorname{Im} g_1(x,y,t) = \Delta Y \int_{t-T}^{t} \sin(\omega(s-t)) \sum_i \delta(s-s_i) \cdot p(x,y,s_i)ds \qquad (17)$$

As shown in Equations (15) to (17), the time correlation signal can be output using an event that occurs during the period (cycle T) during which a correlation is obtained.

(Configuration of Photoelectric Conversion Apparatus)

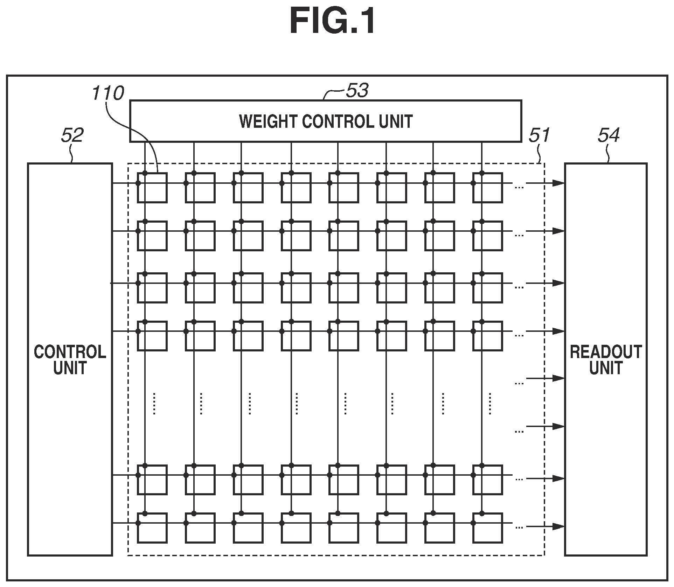

Fig. 1 is a diagram illustrating a configuration of a photoelectric conversion apparatus according to the present embodiment.

The photoelectric conversion apparatus according to the present embodiment includes a pixel array 51. The pixel array 51 includes a plurality of pixels 110 arranged in a plurality of rows and a plurality of columns. A control unit 52 controls a reset operation and a signal output operation on the plurality of pixels 110.

A weight control unit 53 controls weighting (weighting amount) on a signal generated by each pixel 110. A readout unit 54 reads out the signal output from the pixel 110 that is instructed to perform the signal output operation by the control unit 52. The readout unit 54 performs various arithmetic processing operations and then outputs signals to the outside of the photoelectric conversion apparatus. The various arithmetic processing operations may include processing on time correlation imaging.

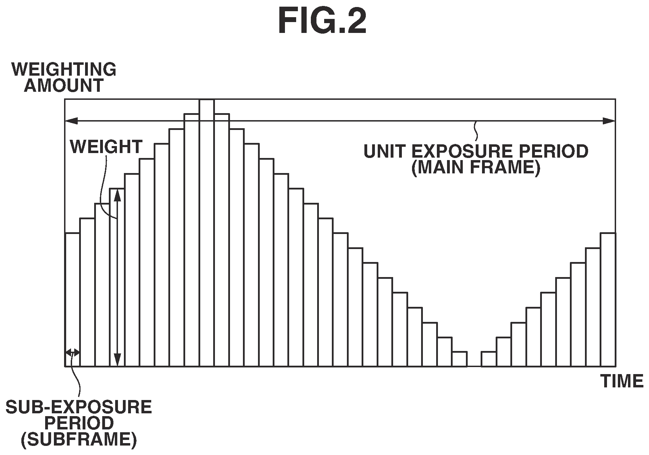

Fig. 2 illustrates an example of a weighting amount control operation by the weight control unit 53. A unit exposure period can be divided into a plurality of sub-exposure periods. A weighting amount (a coefficient corresponding to a signal generated by the pixel 110) during a sub-exposure period is changed, for example, along a sin waveform. Changing the weighting amount as described above makes it possible to generate the signal corresponding to Equation (17) described above. On the other hand, the weighting amount may be changed into a cos waveform. In this case, the signal corresponding to Equation (16) can be generated.

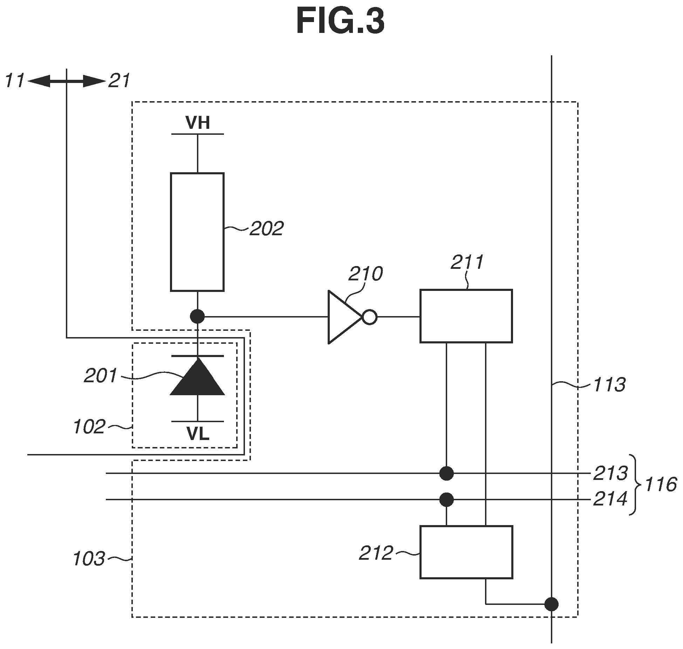

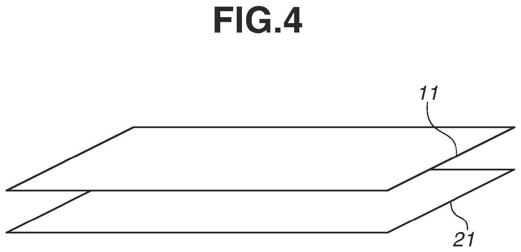

Fig. 3 illustrates components included in the avalanche photodiode (APD) pixel 110 (also referred to as the pixel 110) as an example of each pixel 110 illustrated in Fig. 1. Note that APD is an abbreviation for Avalanche Photo Diode. An APD 201 generates a charge pair depending on incident light by photoelectric conversion. A voltage VL (first voltage) is supplied to the anode of the APD 201. A voltage VH (second voltage) that is higher than the voltage VL supplied to the anode is supplied to the cathode of the APD 201. A reverse bias voltage that allows the APD 201 to perform an avalanche multiplication operation is supplied to the anode and the cathode. In the state where such a voltage is supplied, charges generated by incident light cause avalanche multiplication, so that an avalanche current is generated. As illustrated in Fig. 4, the pixel 110 has a structure in which a first chip 11 and a second chip 21 are stacked. The first chip 11 is provided with the APD 201 illustrated in Fig. 3. The other members in the pixel 110 illustrated in Fig. 3 are provided on the second chip 21. The photoelectric conversion apparatus according to the present embodiment has a so-called stacked sensor structure in which the first chip 11 and the second chip 21 are stacked.

In a case where a reverse bias voltage is supplied, there are two modes, that is, a Geiger mode for operation in which the potential difference between the anode and the cathode is greater than a breakdown voltage, and a linear mode for operation in which the potential difference between the anode and the cathode is close to the breakdown voltage, or is less than or equal to the breakdown voltage. The APD that operates in the Geiger mode is referred to as a Single-Photon Avalanche Diode (SPAD). For example, the voltage VL (first voltage) is -30 V and the voltage VH (second voltage) is 1 V.

A quench unit 202 is connected to each of the APD 201 and a power supply for supplying the voltage VH. The quench unit 202 includes a function of replacing a change in avalanche current generated in the APD 201 with a voltage signal. The quench unit 202 functions as a load circuit (quench circuit) during signal multiplication by avalanche multiplication, and has an operation (quench operation) to suppress avalanche multiplication by reducing the voltage to be supplied to the APD 201.

A signal processing unit 103 includes a waveform shaping unit 210, a counter unit 211, and a selection circuit 212. In the present specification, the signal processing unit 103 only needs to include at least one of the waveform shaping unit 210, the counter unit 211, and the selection circuit 212.

The waveform shaping unit 210 shapes a change in the potential at the cathode of the APD 201 that is obtained during photon detection, and outputs a pulse signal. As the waveform shaping unit 210, for example, an inverter circuit is used. While Fig. 3 illustrates an example where one inverter is used as the waveform shaping unit 210, a circuit having a configuration in which a plurality of inverters is connected in series may be used, or another circuit having a waveform shaping effect may also be used.

The counter unit 211 counts the number of pulse signals output from the waveform shaping unit 210 and holds the count value. When a control pulse pRES is supplied via a drive line 213, the signal held in the counter unit 211 is reset.

The selection circuit 212 is supplied with a control pulse pSEL via a drive line 214 illustrated in Fig. 3 from the vertical scanning circuit unit 110 illustrated in Fig. 1, thereby switching electrical connection and disconnection between the counter unit 211 and the signal line 113. The selection circuit 212 includes, for example, a buffer circuit for outputting signals.

A switch such as a transistor may be disposed between the quench unit 202 and the APD 201 and between a photoelectric conversion unit 102 and the signal processing unit 103 to switch the electrical connection. Similarly, the supply of the voltage VH or the voltage VL to be supplied to the photoelectric conversion unit 102 may be electrically switched using a switch such as a transistor.

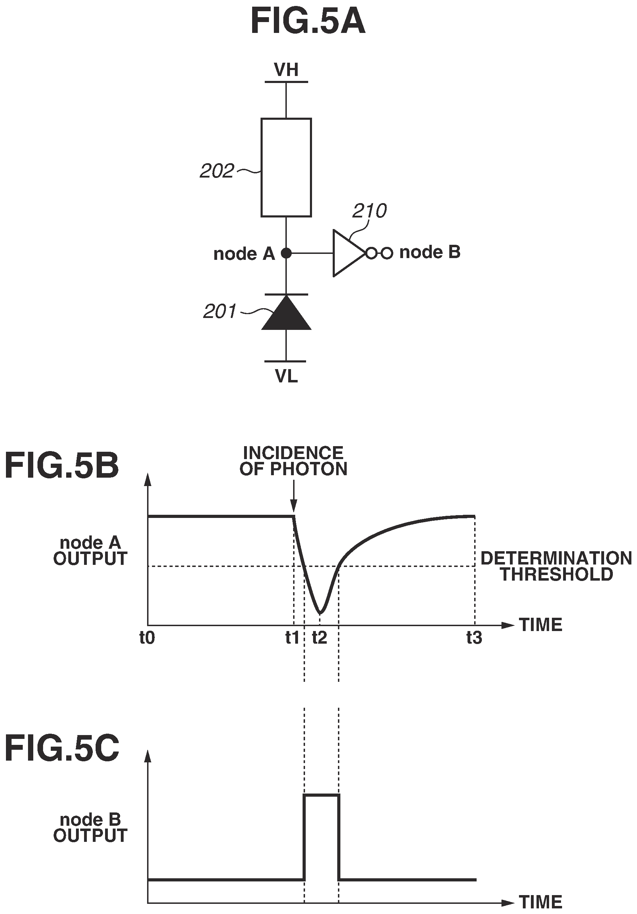

Figs. 5 schematically illustrate a relationship between an operation of the APD 201 and an output signal. The description is made assuming that the weighting amount set by the weight control unit 53 is "1". Fig. 5A illustrates only the APD 201, the quench unit 202, and the waveform shaping unit 210 illustrated in Fig. 2. Assume herein that the input side of the waveform shaping unit 210 is set as a node A and the output side of the waveform shaping unit 210 is set as a node B. Fig. 5B illustrates a waveform change at the node A illustrated in Fig. 5A. Fig. 5C illustrates a waveform change at the node B illustrated in Fig. 5A.

During a period from time t0 to t1, a potential difference VH - VL is applied to the APD 201 illustrated in Fig. 5A.

When a photon is incident at time t1, an avalanche multiplication current flows to the quench unit 202, so that the voltage at the node A drops. When the amount of voltage drop further increases and the potential difference to be applied to the APD 201 decreases, the avalanche multiplication of the APD 201 stops and the voltage level of the node A does not drop further from a certain value. After that, a current compensating for the amount corresponding to the voltage drop from the voltage VL flows through the node A, and the node A settles back to the original potential level at time t3.

In this case, part of an output waveform exceeding a certain threshold at the node A is subjected to the waveform shaping performed by the waveform shaping unit 210 and is output as a signal at the node B.

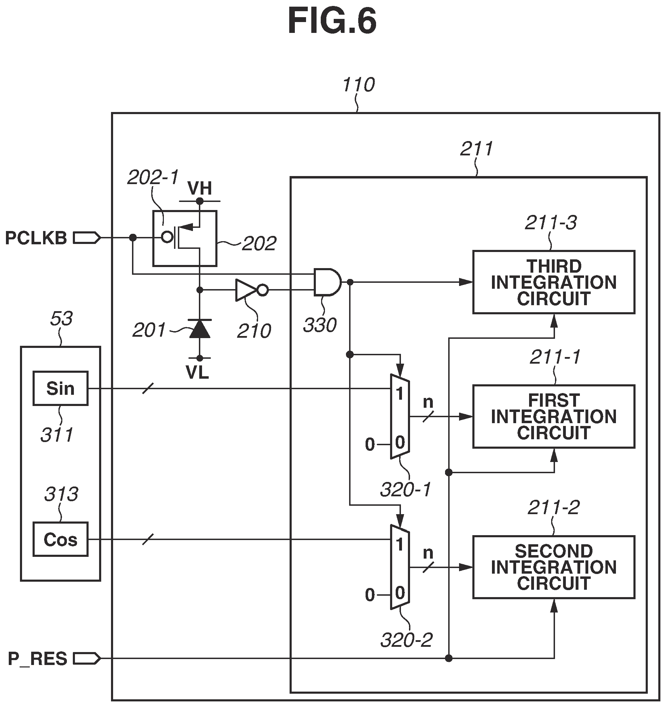

Fig. 6 is a configuration diagram illustrating a more detailed configuration of the pixel 110 according to the present embodiment. In Fig. 6, members having the same functions as the members illustrated in Fig. 2 are denoted by the same reference numerals as those in Fig. 2.

The quench unit 202 includes a quench element 202-1. A quench element 202-2 is a p-type metal-oxide semiconductor (MOS) transistor. The quench element 202-2 receives a signal PCLKB from the control unit 52 illustrated in Fig. 1. This signal PCLKB is a clock signal and is, for example, a pulse signal with a frequency of 1 MHz to 200 MHz. The number of pulses in one main frame can be set depending on the number of bits of the counter unit 211 to be described below. If the counter unit 211 performs a 11-bit measurement operation, the number of pulses is 2048 pulses.

The counter unit 211 includes a third integration circuit 211-3, a first integration circuit 211-1, and a second integration circuit 211-2. The counter unit 211 further includes a multiplexer (MUX) 320-1, a MUX 320-2, and an AND circuit 330. The AND circuit 330 outputs a signal indicating a logical AND between the output from the waveform shaping circuit 210 and the signal PCLKB to each of the third integration circuit 211-3, the MUX 320-1, and the MUX 320-2. The third integration circuit 211-3 counts the number of signals from the AND circuit 330 with a weighting amount "1". In other words, a counting result corresponding to the number of photons incident on the avalanche photodiode 211 is generated.

The weight control unit 53 illustrated in Fig. 1 includes a sin waveform generation unit 311 (first waveform generation unit) and a cos waveform generation unit 313 (second waveform generation unit). The sin waveform generation unit 311 outputs a plurality of pulse signals to an input node of the MUX 320-1 as a bus signal.

When the output from the AND circuit 330 is at the high level, the MUX 320-1 outputs the output from the sin waveform generation unit 311 to the first integration circuit 211-1. On the other hand, when the output from the AND circuit 330 is at the low level, an output "0" (ground voltage) is output to the first integration circuit 211-1. When the output "0" is given, the first integration circuit 211-1 does not perform a count-up operation. The signal output from the sin waveform generation unit 311 is set in such a manner that the count operation of the first integration circuit 211-1 has the weighting amount illustrated in Fig. 2.

Thus, the first integration circuit 211-1 performs the count-up operation depending on the value of the bus signal output from the sin waveform generation unit 311 when the output from the AND circuit 330 is at the high level. With this configuration, the signal of the sin component represented by Equation (17) can be generated by the first integration circuit 211-1.

The cos waveform generation unit 313 outputs a bus signal as a plurality of pulse signals to an input node of the MUX 320-2.

When the output from the AND circuit 330 is at the high level, the MUX 320-2 outputs the output from the cos waveform generation unit 313 to the second integration circuit 211-2. On the other hand, when the output from the AND circuit 330 is at the low level, the MUX 320-2 outputs the output "0" (ground voltage) to the second integration circuit 211-2. When the output "0" is given, the second integration circuit 211-2 does not perform the count-up operation. The signal output from the cos waveform generation unit 313 is set in such a manner that the count operation of the second integration circuit 211-2 has the weighting amount corresponding to the waveform at which a cos waveform is used for weighting of the sin waveform illustrated in Fig. 2. Specifically, at predetermined time (timing), the weighting amount for the first integration circuit 211-1 is different from the weighting amount for the second integration circuit 211-2. This is because one of the weighting amounts corresponds to the sin waveform, and the other of the weighting amounts corresponds to the cos waveform. The weighting amount for the first integration circuit 211-1 need not necessarily be different from the weighting amount for the second integration circuit 211-2 at all times. At a certain predetermined time (timing), the weighting amount for the first integration circuit 211-1 may match the weighting amount for the second integration circuit 211-2.

Thus, the second integration circuit 211-2 performs the count-up operation depending on the value of the bus signal as a plurality of pulse signals output from the cos waveform generation unit 313 when the output from the AND circuit 330 is at the high level. Accordingly, the signal of the cos component represented by Equation (16) can be generated by the second integration circuit 211-2.

The control unit 52 illustrated in Fig. 1 outputs a signal P_RES to each of the first integration circuit 211-1, the second integration circuit 211-2, and the third integration circuit 211-3. When the signal P_RES is at the high level, the signal held in each of the first integration circuit 211-1, the second integration circuit 211-2, and the third integration circuit 211-3 is reset to an initial value. The signal P_RES transitions to the high level at a timing when the main frame illustrated in Fig. 2 is started, and is then changed to the low level. Thus, the count operation in the main frame by the count unit 211 is started. One main frame corresponds to one image.

The weighting amount for the output from the APD 201 of the third integration circuit 211-3 is "1", which is constant weighting over the entire period in which the first integration circuit and the second integration circuit perform an integration operation by weighting. Weighting on the output from the APD 201 of the first integration circuit 211-1 is predetermined weighting corresponding to a sin waveform. Weighting on the output from the APD 201 of the second integration circuit 211-2 is predetermined weighting corresponding to a cos waveform. In other words, weighting on the output from the APD 201 of the third integration circuit 211-3, weighting on the output from the APD 201 of the first integration circuit 211-1, and weighting on the output from the APD 201 of the second integration circuit 211-2 are different from each other. That is, weighting on the output from the APD 201 in some of a plurality of integration circuits is different from weighting on the output from the APD 201 in the others of the plurality of integration circuits. With this configuration, the photoelectric conversion apparatus according to the present embodiment can realize time correlation imaging. The photoelectric conversion apparatus according to the present embodiment performs time correlation imaging using the APD 201. Consequently, time correlation imaging in a low-luminance imaging scene can be suitably performed.

The sin waveform generation unit 311 and the cos waveform generation unit 313 may be provided in each of the plurality of pixels 110. Alternatively, each of the plurality of pixels 110 may be divided into a plurality of blocks included in each pixel, and the sin waveform generation unit 311 and the cos waveform generation unit 313 may be provided in each of the plurality of blocks.

(Second Embodiment)

Differences between a photoelectric conversion apparatus according to a second embodiment and that of the first embodiment will be mainly described.

In the first embodiment, each pixel includes an integration circuit for acquiring a cos component and a sin component. In the present embodiment, the signal corresponding to the sin component and the signal corresponding to the cos component are input to the quench unit 202. This configuration makes it possible to perform time correlation imaging using the APD 201 without the need of providing two integration circuits, that is, the integration circuit for the cos component and the integration circuit for the sin component.

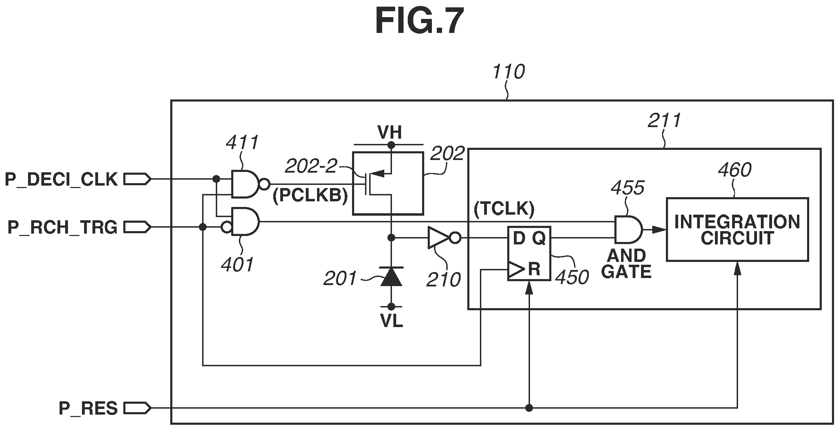

Fig. 7 is a diagram illustrating a configuration of the pixel 110 according to the present embodiment. In Fig. 7, members having the same functions as the members illustrated in Fig. 6 are denoted by the same reference numerals as those in Fig. 6.

In the pixel 110 according to the present embodiment, the quench unit 202 includes a quench element 202-2. An output (signal PCLKB as a first pulse signal) from a NAND circuit 411 (first logic circuit) is input to the quench element 202-2. A plurality of pulse signals is input to the NAND circuit 411. The plurality of pulse signals includes a signal P_DECI_CLK and a signal P_RCH_TRG illustrated in Fig. 1. A logic circuit 401 receives the signal P_RCH_TRG output from the control unit 52. The output from the logic circuit 401 is represented as a signal TCLK. The signal P_DECI_CLK is generated by thinning out some of the pulse signals from the clock signal input to the weight control unit 53. This thinning-out processing on the clock signal is performed so that the integration circuit 460 performs an integration operation at a cycle corresponding to weighting corresponding to the sin component or the cos component. This processing will be described in detail below. The signal P_RCH_TRG transitions to the high level at the start of a subframe. The signal P_RCH_TRG is maintained at the low level during one subframe. When the signal P_RCH_TRG and the signal P_DECI_CLK are at the high level, the output from the NAND circuit 411 transitions to the low level. This allows the quench element 202-2, which is a p-type MOS transistor, to turn on, so that a recharge operation on the APD 201 is executed. This recharge operation is performed only once on one subframe.

An output signal from the waveform shaping circuit 210 is input to an input terminal D of a flip-flop circuit 450 (second logic circuit). The signal P_RES output from the control unit 52 is input to a reset terminal R. The signal P_RCH_TRG is input to a clock input terminal. An AND circuit 455 (third logic circuit) generates a second pulse signal as a logical AND of an output from the logic circuit 401 and an output from the flip-flop circuit 450. The second pulse signal obtained by the logical AND is input to an integration circuit 460. The signal P_RES transitions to the high level at the start of one main frame. In response to this, the flip-flop circuit 450 and the integration circuit 460 are reset.

In the pixel 110 according to the present embodiment, when a photon is incident on the APD 201, the output from the waveform shaping circuit 210 transitions to the high level. An output Q of the flip-flop circuit 450 transitions to the high level with a change in the output from the waveform shaping circuit 210. Every time the pulse signal of the signal P_DECI_CLK transitions from the low level to the high level (that is, every time the TCLK signal transitions to the high level), the output from the AND circuit 455 transitions from the low level to the high level. Thus, the integration circuit 460 performs the integration operation a number of times corresponding to the number of times of transition of TCLK from the low level to the high level after the output Q of the flip-flop circuit 450 has changed to the high level.

In other words, the signal of the integration circuit 460 generated when one photon is incident is weighted by the signal TCLK. This enables the integration circuit 460 to perform the integration operation by weighting on the incidence of one photon.

When the signal corresponding to the sin component is generated by the integration circuit 460, weighting on one subframe is set as illustrated in Fig. 2. The control unit 52 sets the cycle of the signal P_DECI_CLK so as to correspond to weighting assigned to one subframe. This enables the integration circuit 460 to generate the signal corresponding to weighting on the subframe illustrated in Fig. 2.

Also, when the signal corresponding to the cos component is generated by the integration circuit 460, the control unit 52 may set the cycle of the signal P_DECI_CLK to perform weighting on the subframe corresponding to the cos component.

The above-described configuration makes it possible to perform time correlation imaging using the APD 201 also in the present embodiment.

A modified example will be described.

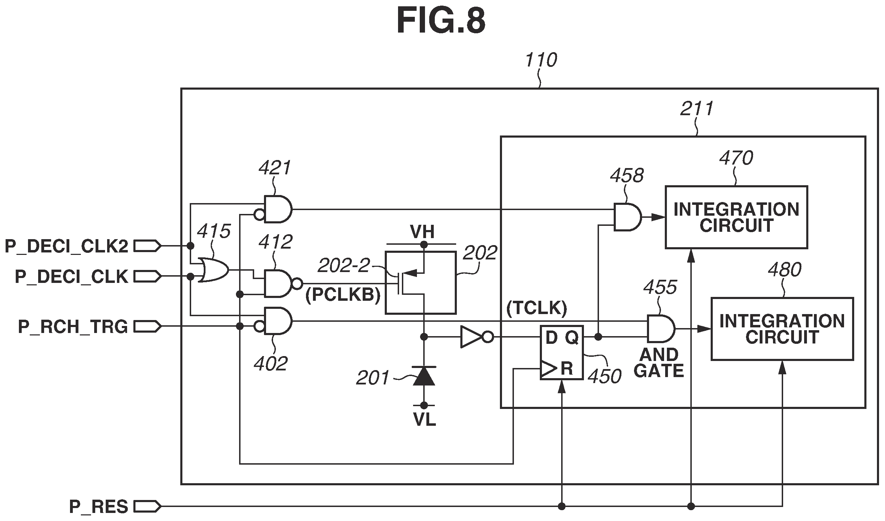

Fig. 8 illustrates a configuration of the pixel 110 according to a modified example of the present embodiment. This modified example has a configuration including an integration circuit 470 and an integration circuit 480. The integration circuit 480 performs an integration operation by weighting in the same manner as in the integration circuit 460 illustrated in Fig. 7. On the other hand, the integration circuit 470 performs an integration operation corresponding to a change in the output from the APD 201 without weighting. In other words, the integration circuit 470 is an integration circuit that acquires normal image capturing components.

The pixel 110 illustrated in Fig. 8 further includes an OR circuit 415 and a logic circuit 421. The NAND circuit 412 receives an output from the OR circuit 415 and an output of the signal P_RCH_TRG. The logic circuit 402 receives the signal P_DECI_CLK and the signal obtained by inverting the signal P_RCH_TRG. The logic circuit 421 receives a signal P_DECI_CLK2 and the signal obtained by inverting the signal P_RCH_TRG. The signal P_DECI_CLK2 is a signal that transitions to the high level only once at the end of the period of one subframe. An AND circuit 458 (fourth logic circuit) outputs a third pulse signal using an output from the logic circuit 421 and an output from the flip-flop circuit 450. If the output Q of the flip-flop 450 has changed to the high level during the period of one subframe (that is, if a photon is incident on the APD 201), the integration circuit 470 performs a count-up operation. On the other hand, if the output Q of the flip-flop 450 is kept at the low level during the period of one subframe (that is, if no photon is incident on the APD 201), the integration circuit 470 does not perform the count-up operation. Thus, the integration circuit 470 performs the integration operation without weighting.

In this modified example, the integration circuit 470 and the integration circuit 480 can perform integration operations by different weighting operations on the detection of incidence of one photon.

(Third Embodiment)

Difference between a photoelectric conversion apparatus according to a third embodiment and that of the modified example of the second embodiment will be mainly described.

The photoelectric conversion apparatus according to the present embodiment divides the pulse signal of the signal P_DECI_CLK illustrated in Fig. 7 into a plurality of signals P_DECI_CLK3 and P_ DECI_CLK4. The present embodiment is more advantageous in dealing with higher frequencies than in the case of transmitting the signal P_DECI_CLK in a single phase as illustrated in Fig. 7. Further, for the integration processing performed by the integration circuit 490, the signal P_DECI_CLK3 and the signal P_DECI_CLK4 are generated so as to correspond to a higher-order bit and a lower-order bit of a count signal generated by the integration circuit 490. This enables the integration circuit 490 to perform integration processing in which the higher-order bit and the lower-order bit can be divided.

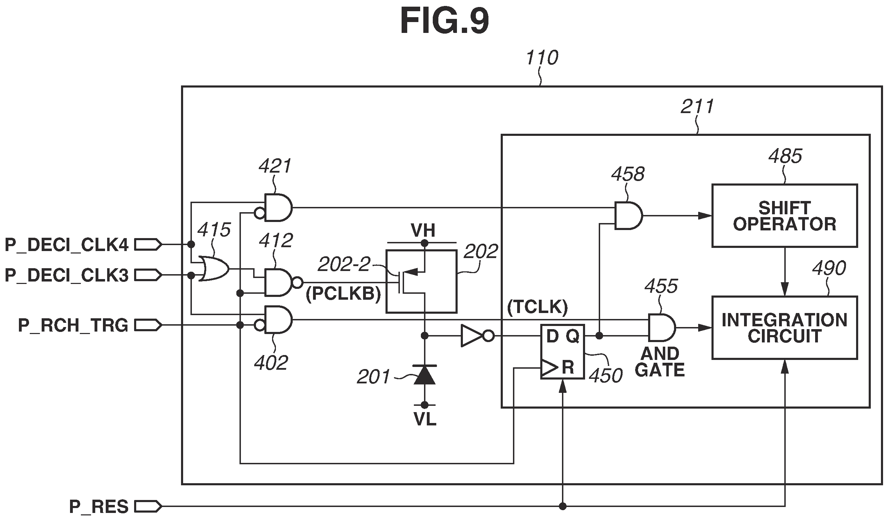

Fig. 9 is a diagram illustrating a configuration of the pixel 110 in the photoelectric conversion apparatus according to the present embodiment. In Fig. 9, members having the same functions as the members illustrated in Fig. 8 are denoted by the same reference numerals as those in Fig. 8.

In the pixel 110 according to the present embodiment, the signal P_DECI_CLK3 and the signal P_DECI_CLK4 are input to the OR circuit 415 from the weight control unit 53. The signal P_DECI_CLK3 is generated as the signal corresponding to the higher-order bit, and the signal P_DECI_CLK4 is generated as the signal corresponding to the lower-order bit. The signal P_DECI_CLK3 and the signal P_DECI_CLK4 can be configured as partial pulse signals of the signal P_DECI_CLK illustrated in Fig. 7. The OR circuit 415 outputs the signal corresponding to the signal P_DECI_CLK illustrated in Fig. 7 to the NAND circuit 412. With this configuration, the transmission of the signal P_DECI_CLK3 and the signal P_DECI_CLK4 as divided signals is more likely to increase the frequency of the signal to be output to the NAND circuit 412 as compared with the case of outputting the signal P_DECI_CLK in a single phase. Since the signal P_DECI_CLK is transmitted to the plurality of pixels 110 from the weight control unit 53, the improvement in signal frequency is constrained due to the presence of a parasitic capacitance of a signal line through which the signal is transmitted. On the other hand, in the present embodiment, the OR circuit 415 is provided in each pixel 110 and the signal P_DECI_DLK is generated in each pixel 110, which leads to an improvement in signal frequency.

The pixel 110 according to the present embodiment includes a shift operator 485. The shift operator 485 receives an output result from the AND circuit 458 and performs processing of shifting the bits of the signal generated by the integration circuit 490. The signal P_DECI_CLK4 is the signal corresponding to the signal for the higher-order bit. Accordingly, if the output Q of the flip-flop circuit 450 is at the high level at a timing when the signal P_DECI_CLK4 has transitioned to the high level, arithmetic processing is performed so that the integration circuit 490 can perform integration of the signal corresponding to the higher-order bit. For example, it is assumed that the signal P_DECI_CLK4 is used to generate the higher-order signal corresponding to two bits relative to the signal P_DECI_CLK3. In this case, if the output Q of the flip-flop circuit 450 is at the high level at a timing when the signal P_DECI_CLK4 has transitioned to the high level, the integration circuit 490 is caused to perform a count operation perform a count operation shifted to the higher-order by two bits. Specifically, the integration circuit 490 is caused to perform integration processing fourfold (2-bit shift) greater than integration processing of the signal P_DECI_CLK3 when the signal P_DECI_CLK4 is at the low level. This enables the integration circuit 490 to perform integration processing corresponding to the higher-order bit and the lower-order bit using the signal P_DECI_CLK4 for the higher-order bit and the signal P_DECI_CLK3 for the lower-order bit, respectively.

In the present embodiment, the signal P_DECI_CLK3 and the signal P_DECI_CLK4 are described as pulse signals corresponding to the higher-order bit and the lower-order bit, respectively, of the integration circuit 490. The present embodiment is not limited to this example. For example, the signal P_DECI_CLK illustrated in Fig. 7 may be equally divided into the signal P_DECI_CLK3 and the signal P_DECI_CLK4. In this configuration, the logic circuit 421, the logic circuit 459, and the shift operator 485 can be omitted. This configuration is also more advantageous in increasing the frequency of the signal PCLKB than in the configuration illustrated in Fig. 7.

The above-described first to third embodiments may be carried out in combination. For example, the weighting amount for the second integration circuit 211-2 and the weighting amount for the third integration circuit 211-3 may be different as described above with reference to Figs. 7 and 8 in the second embodiment in the configuration described in the first embodiment. Specifically, in the second integration circuit 211-2 according to the first embodiment, the signal corresponding to the sin component may be integrated by first weighting during the period of a first subframe, and may be integrated by second weighting during the period of a second subframe.

The integration circuits described in the embodiments read out a signal for each main frame. However, the integration circuits are not limited to this configuration. The integration circuits may continuously perform integration processing on a plurality of main frames.

(Fourth Embodiment)

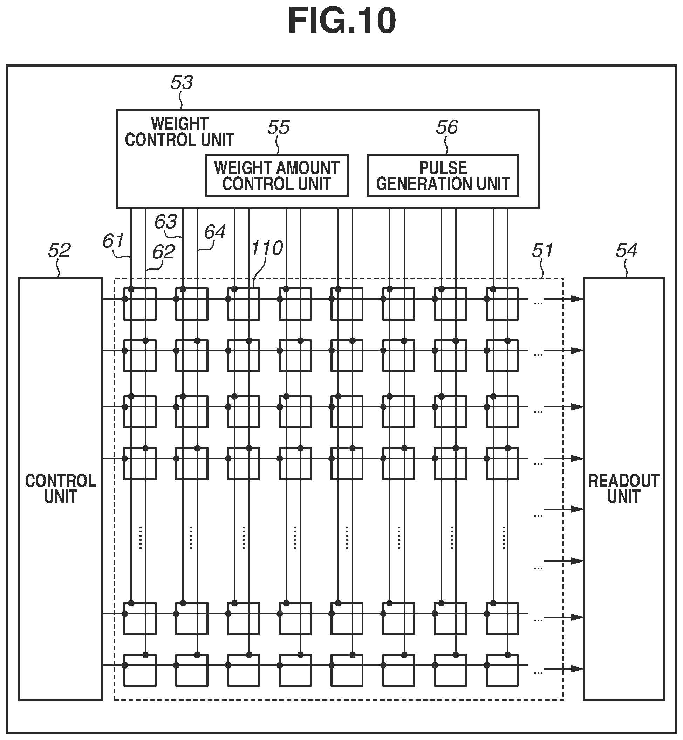

Fig. 10 is a diagram illustrating a configuration of a photoelectric conversion apparatus according to a fourth embodiment.

Differences from Fig. 1 described above will be described.

Weighting signal lines 61 to 64 output from the weight control unit 53 are alternately connected every four pixels 110 including two pixels in the vertical direction and two pixels in the horizontal direction. Specifically, among the four pixels including two pixels in the vertical direction and two pixels in the horizontal direction, the upper-left pixel 110 is connected to the weighting signal line 61, the lower-left pixel 110 is connected to the weighting signal line 62, the upper-right pixel 110 is connected to the weighting signal line 63, and the lower-right pixel 110 is connected to the weighting signal line 64. The connection configuration in the pixel array 51 as described above is repeated.

The weighting signal lines 61 to 64 are controlled only by a weight amount control unit 55 in the weight control unit 53, or are controlled by two blocks, that is, the weight amount control unit 55 and a pulse generation unit 56. This operation will be described in detail below.

The pixel 110 used in Fig. 10 corresponds to that illustrated in Fig. 7 described above.

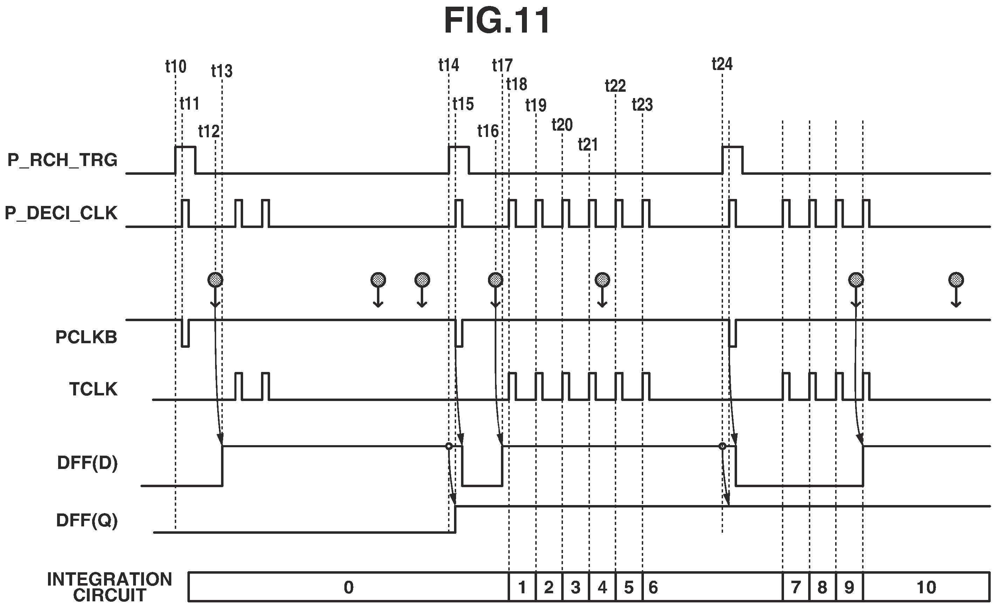

A timing diagram of Fig. 11 illustrates an operation in the configuration of the pixel 110 illustrated in Fig. 7 described above.

At time t10, the signal P_RCH_TRG transitions to the high level. At this time, a subframe is started. Next, at time t11, the signal P_DECI_CLK also transitions to the high level. At this time, the output PCLKB from the NAND circuit 411 transitions to the low level. As a result, the quench element 202-2, which is a p-type MOS transistor, is turned on, so that the recharge operation on the APD 201 is executed. This recharge operation is performed only once on one subframe.

Time t12 is the time when a photon is first incident on the APD 201 in this subframe. Thus, at time t13, the output from the waveform shaping circuit 210 transitions to the high level, and the D-input of the connected flip-flop circuit 450 also transitions to the high level. Even after the subsequent photon has reached in this subframe, the circuit operation is not changed and this state is held until time t14.

Next, at time t14, the signal P_RCH_TRG transitions to the high level. At this time, the subsequent subframe is started. Since this signal is connected to the clock input terminal of the flip-flop circuit 450, the Q-output of the flip-flop circuit 450 transitions to the high level. At time t15, the signal P_DECI_CLK also transitions to the high level, so that the output PCLKB transitions to the low level. Thus, the recharge operation on the APD 201 is executed and the output from the waveform shaping circuit 210, that is, the D-input of the flip-flop circuit 450 transitions to the low level.

On the other hand, a pulse signal is input as the signal P_DECI_CLK at time t18 to t23. At this time, the signal P_RCH_TRG is at the low level, and thus the logic circuit 401 outputs the same pulse signal as the signal TCLK at time t18 to t23. At time t18 to t12, the Q-output of the flip-flop circuit 450 is at the high level, and thus the signal TCLK is directly output from the AND circuit 455. The signal TCLK obtained at time t18 to t23 is integrated by the integration circuit 460.

Time t16 is the time when a photon is first incident on the APD 201 in this subframe in the same manner as that at time t12. As a result, at time t17, the output from the waveform shaping circuit 210 transitions to the high level and the D-input of the connected flip-flop circuit 450 also transitions to the high level.

Next, at time t24, the signal P_RCH_TRG transitions to the high level in the same manner as that at time t14. Thus, the subsequent subframe is started. The subsequent operation is similar to that described above, and thus the description thereof is omitted.

Thus, the detection of a photon in the previous subframe can be weighted with the number of signals TCLK in the current subframe.

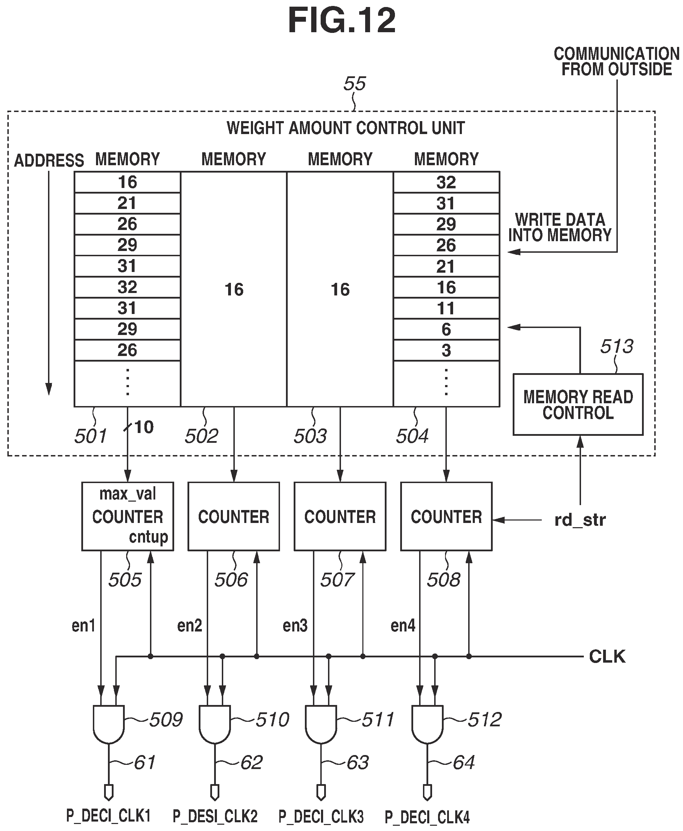

Fig. 12 illustrates an internal configuration of the weight control unit 53. The present embodiment is an embodiment in which the internal configuration is controlled only by the weight amount control unit 55.

In this case, four memories 501 to 504 (holding units) are provided. In Fig. 12, the address advances in the longitudinal direction of each memory. A readout operation from the four memories is controlled by a read control unit 513. The same address is designated for the four memories and the address is read out. For example, when an initial address is designated and read out, data 16 is read out from the memories 501 to 503 and data 32 is read out from the memory 504. At the next address, data 21 is read out from the memory 501, data 16 is read out from the memories 502 and 503, and data 31 is read out from the memory 504. These pieces of data correspond to the weight amount to be output from the weight amount control unit 55.

Prior to main driving of the photoelectric conversion apparatus, setting information is written into each memory through communication of the photoelectric conversion apparatus from the outside.

Data read out from the memory 501 is output to a counter 505. Similarly, data read out from the memory 502 is output to a counter 506, data read out from the memory 503 is output to a counter 507, and data read out from the memory 504 is output to a counter 508.

A common signal CLK is input to each of the counters 505 to 508. Each of the counters 505 to 508 performs a count operation using the signal CLK. The counters 505 to 508 output signals (signals en1 to en4 illustrated in Fig. 12), respectively, which transition to the high level during the count operation.

The counters 505 to 508 are one example of a measurement unit that measures data (weight amount) read out from the memories 501 to 504.

Next, AND circuits 509 to 512 receive the signals en1 to en4, respectively, from the counters 505 to 508, and also receive the signal CLK. The AND circuits 505 to 508 output signals P_DECI_CLK1 to P_DECI_CLK4, respectively, as a logical AND of two input signals. Thus, the weight amount held in each of the memories 501 to 504 is converted into the number of pulses as the signals P_DECI_CLK1 to P_DECI_CLK4 to be output.

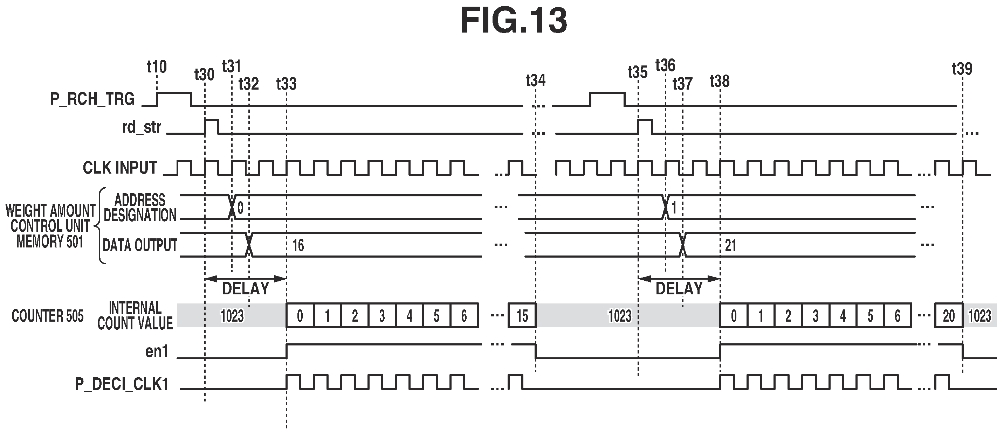

A timing diagram of Fig. 13 illustrates an operation of the weight control unit 53 illustrated in Fig. 12.

Fig. 13 illustrates an operation timing from a readout operation from the memory 501 to an operation of the counter 505 in the weight amount control unit 55. Operations of the other memories 502 to 504 and counters 506 to 508 are similar to those of the memory 501 and the counter 505, and thus the descriptions thereof are omitted.

At time t10, the signal P_RCH_TRG transitions to the high level in the same manner as in Fig. 11. Thus, the operation on a subframe is started. At time t11 illustrated in Fig. 11, the signal P_DECI_CLK is also at the high level. In the operation illustrated in Fig. 11, during the period in which the signal P_RCH_TRG is at the high level, a rising pulse of the signal P_DECI_CLK is separately controlled in the weight control unit 53. The OR circuit 415 the OR circuit 415 outputs the signal indicating the logical OR of one of the signals P_DECI_CLK1 to P_DECI_CLK4 and the signal P_DECI_CLK.

Next, at time t30, a signal rd_str transitions to the high level. Thus, a readout control operation by the memory read control unit 513 is started. Accordingly, at time t31, address designation in the memory 501 is performed. In this case, an initial address in the memory 501 is designated. In response to the address designation, at time t32, data 16 held in the memory 501 is output.

Time 33 is the time when the count operation in the counter 505 is started. In this case, to wait for a series of operations from the address designation in the memory 501 to the signal readout operation from the memory 501, the counter 505 starts the count operation after the lapse of a predetermined delay from the time when the signal rd_str transitions to the high level. Further, the signal en1 output from the counter 505 is set to the high level.

The counter 505 performs the count-up operation using the input signal CLK, and performs the count-up operation until the value of data 15 that is obtained by subtracting "1" from data 16 read out from the memory 501 is reached. At time t34, the signal en1 of the counter 505 transitions from the high level to the low level. As a result, 16 pulses can be output as a signal P_DICE_CLK1. This indicates a control operation for outputting the same number of pulses as that of data 16 held in the memory 501. At time t34, the internal counter of the counter 505 sets the count value to a predetermined value (maximum value) in preparation for the subsequent operation. It can also be said that this state is a reset state of the counter 505.

Next, the signal P_RCH_TRG transitions to the high level again and the processing proceeds to the operation on the subsequent subframe.

At time t35, a start signal is provided to the signal rd_str to start the operation on the subframe in the same manner as that at time t30.

Next, at time t36, the next address is designated in the memory 501. Then, at time t37, data 21 held in the memory 501 is read out.

At time t38, the operation of the counter 505 is started in the same manner as that at time t33. The counter 505 starts the count-up operation in response to the signal CLK input to the counter 505. The counter 505 performs the count-up operation until the value "20" that is obtained by subtracting "1" from data 21 read out from the memory 501 is reached.

At time t39, the signal en1 of the counter 505 is set to the low level. As a result, 21 pulses can be output as the signal P_DICE_CLK1.

This operation makes it possible to change the number of pulses of the signal P_DECI_CLK on a subframe basis and to change the weighting amount.

Further, since data held in the memories 501 to 504 can be changed, the signals P_DECI_CLK1 to P_DECI_CLK4 can be individually changed. For example, the memory 501 holds data with a sine waveform illustrated in Fig. 2, and the memory 504 holds data with a cos waveform. A constant weighting amount is applied to each of the memories 502 and 503. Thus, the signal of the optical flow can be obtained in four pixels in two rows × two columns.

Also, in the present embodiment, the advantageous effects described in the first to third embodiments can be obtained.

While the present embodiment illustrates an example where the signals P_DECI_CLK1 to P_DECI_CLK4 are connected to different pixels 110, respectively, the signals can be applied to the pixels each having a configuration in which two integration circuits are provided in one pixel 110 as illustrated in Fig. 8.

(Fifth Embodiment)

Differences between a fifth embodiment and the fourth embodiment will be mainly described. The parts for which description is omitted in the present embodiment may have a configuration similar to that of the fourth embodiment.

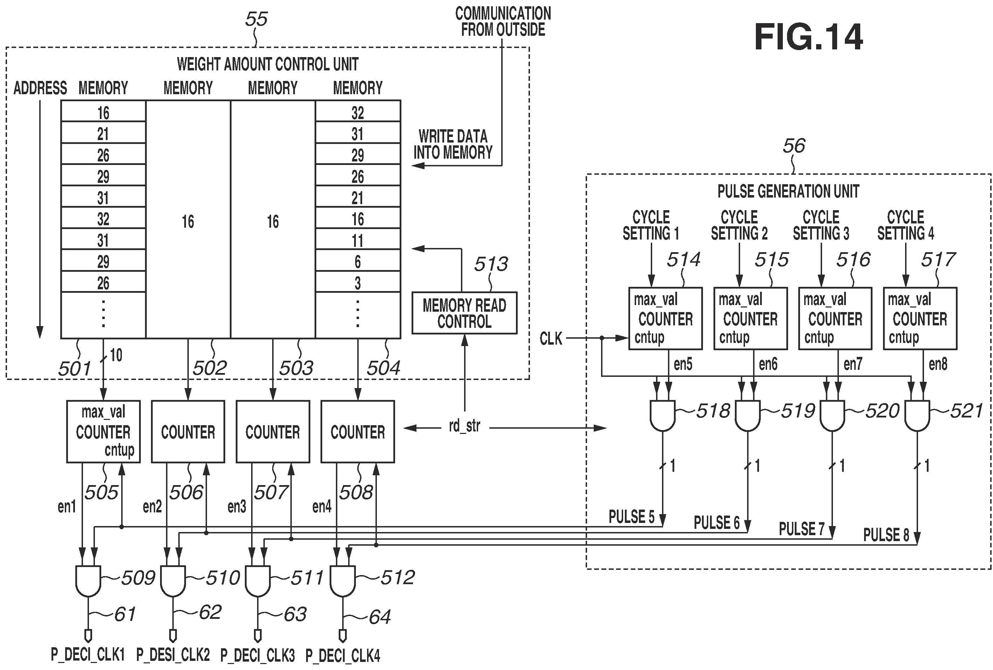

Fig. 14 illustrates an internal configuration of the weight control unit 53. The present embodiment illustrates an example where two units, that is, the weight amount control unit 55 and the pulse generation unit 56 control signals P_DECI_CLK1 to P_DECI_CLK4. The configurations of the weight amount control unit 55, the counters 505 to 508, and the AND circuits 509 to 512 are similar to those illustrated in Fig. 12, and thus the descriptions thereof are omitted.

The pulse generation unit 56 according to the present embodiment illustrated in Fig. 14 includes counters 514 to 517 and AND circuits 518 to 521. First, the common signal CLK is input to each of the counters 514 to 517. Each of the counters 514 to 517 performs the count-up operation using the signal CLK. Each of the counters 514 to 517 can set a maximum value as a count value. After the maximum value of the count value is reached, the counters 514 to 517 can repeatedly perform the count-up operation by returning to the initial count value again. The counters 514 to 517 output signals en5 to 8, respectively, as a periodic signal.

Next, the AND circuits 518 to 521 receive the signals en5 to en8, respectively, and also receive the signal CLK. Then, the AND circuits 518 to 521 output signals indicating the logical AND of the corresponding one of the signals en5 to en8 and the signal CLK as signal pulses 5 to 8, respectively, as illustrated in Fig. 14.

The signal pulses 5 to 8 output from the pulse generation unit 56 are input to the counters 505 to 508, respectively, in the same manner as in Fig. 12, and are also input to the AND circuits 509 to 512, respectively.

The counters 505 to 508 perform the count-up operation using the signal pulses 5 to 8. Then, the counters 505 to 508 continuously perform the count-up operation until the value obtained by subtracting "1" from the value of data read out from the memories 501 to 504 is reached, and then the signals en1 to en4 transition to the low level.

Next, the AND circuits 509 to 512 generate signals indicating the logical AND of the corresponding one of the signals en1 to en4 and the corresponding one of the signal pulses 5 to 8, and output the generated signals as signals P_DECI_CLK1 to P_DECI_CLK4, respectively.

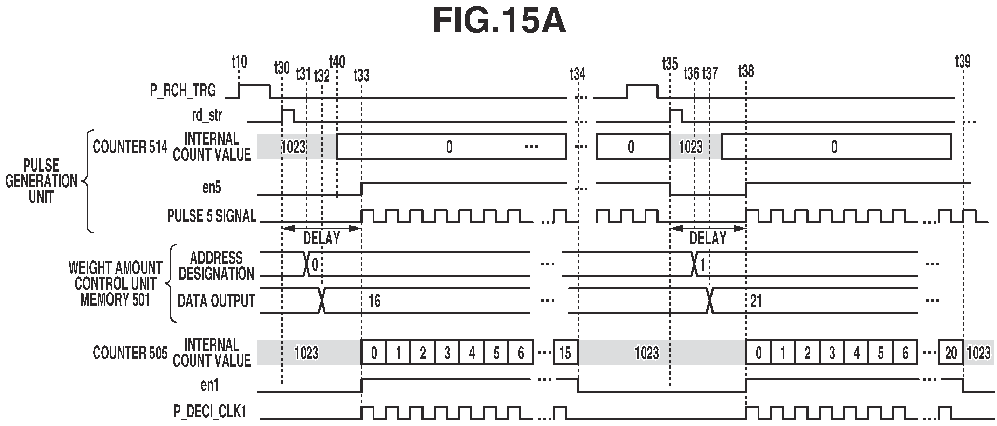

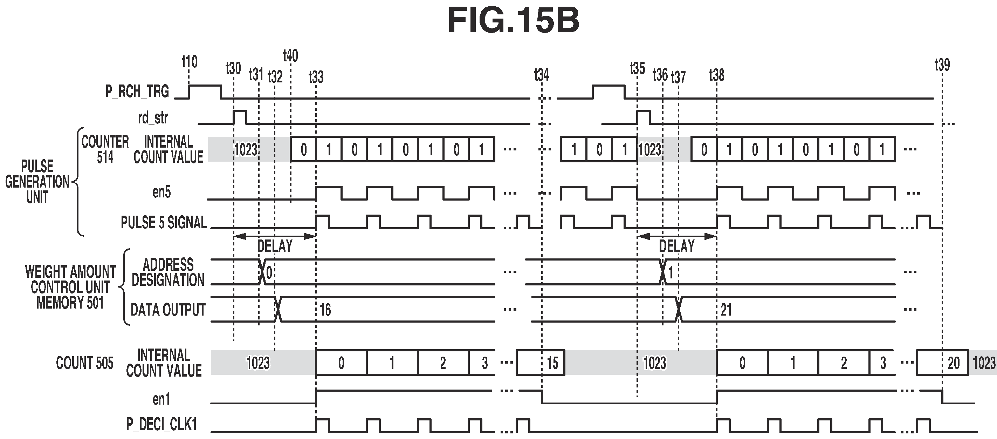

Figs. 15A and 15B are timing diagrams each illustrating an operation of each circuit block illustrated in Fig. 14.

Fig. 15A illustrates pulse signals that are output from the pulse generation unit and continuously oscillate. Fig. 15B illustrates pulse signals at periodic intervals.

Like Fig. 13, this timing diagram illustrates an operation timing from an operation on the memory 501 to an operation on the counter 505 in the weight amount control unit 55, and three other operation timings in the same circuit configuration are similar to those described above, and thus the descriptions thereof are omitted. The descriptions of contents similar to those illustrated in Fig. 13 are also omitted, and only differences will be mainly described. At time t10 illustrated in Fig. 15A, the signal P_RCH_TRG transitions to the high level in the same manner as in Fig. 13, so that the subframe is started. Like in Fig. 13, at time t30 when the signal rd_str transitions to the high level, the memory read control unit 513 starts the readout control operation. At time t31, address designation in the memory 501 is performed. At time t32, data 16 is output from the memory 501.

Next, at time t40, the operation of the counter 514 in the pulse generation unit 56 is started. In the count-up operation of the counter 505, the data read out from the memory 501 and the output pulse from the counter 514 are used. Accordingly, the counter 514 starts the operation prior to the operation of the count 505. Further, in the counter 514, "0" is set in a cycle setting "1" to perform continuous oscillations. Thus, the internal counter value in the counter 514 starts from "0", but is held as "0" without performing the count-up operation.

At the subsequent time t33, in the counter 514, the signal en5 is set to the high level in response to the subsequent clock with reference to the internal counter value "0". The logical AND of the signal en5 and the signal CLK is generated by the AND circuit 518, thereby setting the signal pulse 5 as the pulse signal that continuously oscillates.

Next, in the counter 505, the count-up operation is performed at time t33 by the signal pulse 5 that continuously oscillates. The signal en1 output from the counter 505 is set to the high level by the count operation. The signal P_DECI_CLK1 output from the AND circuit 509 is output as the signal indicating the logical AND of the signal pulse 5 and the signal en1.

At the subsequent time t34, the counter 505 sets the signal en1 to the low level at the value of data 15 obtained by subtracting "1" from data 16 read out from the memory 501. Thus, 16 pulses can be output as the signal P_DICE_CLK1.

In the subsequent subframes, the same operation can be repeated.

Further, differences between Fig. 15B and Fig. 15A will be mainly described.

The counter 514 performs the count-up operation until the value set in the period setting "1" is reached, and performs an operation to return to "0" when the value is reached. In Fig. 15B, "1" is set in the period setting "1" in the counter 514. As a result, the periodic operation in which the internal count value in the counter 514 is repeatedly switched between "0" and "1" is performed.

Thus, at time t33, in the periodic count operation in which "0" and "1" are repeatedly set, one clock pulse is output every two clocks so as to set the signal en5 to the high level at the subsequent signal CLK with reference to the internal counter value "0" in the counter 514.

Thus, one clock pulse is output every two signals CLK from the signal P_DECI_CLK1. This operation is performed 16 times, or 16 pulses are output.

In the subsequent subframes, the same operation can be repeated.

The pulse generation unit 56 according to the present embodiment has a configuration in which the logical AND of the output from the counter and the signal CLK is used. However, this configuration is merely an example. The pulse generation unit can also be implemented using any other configuration. For example, the output from the counter, the count value at which the pulse signal is at the high level, and the count value at which the pulse signal is at the low level are stored as setting values, and the pulse signal is output depending on the setting. The signal corresponding to the logical AND of the pulse signal and the signal CLK is output from the pulse generation unit 56. Also, in such a configuration, the issuance timing of the signal P_DECI_CLK can be controlled among the plurality of pixels 110 (among adjacent pixels 110).

The use of the pulse generation unit 56 as described above makes it possible to adjust the pulse intervals on data with the same weighting amount. Consequently, in addition to the advantageous effects of the first to fourth embodiments, the internal count operation speeds in the counters 505 to 508 can be individually set, so that current peaks can be distributed among the plurality of pixels (adjacent pixels) 110.

(Sixth Embodiment)

A sixth embodiment is a modified example of the fifth embodiment.

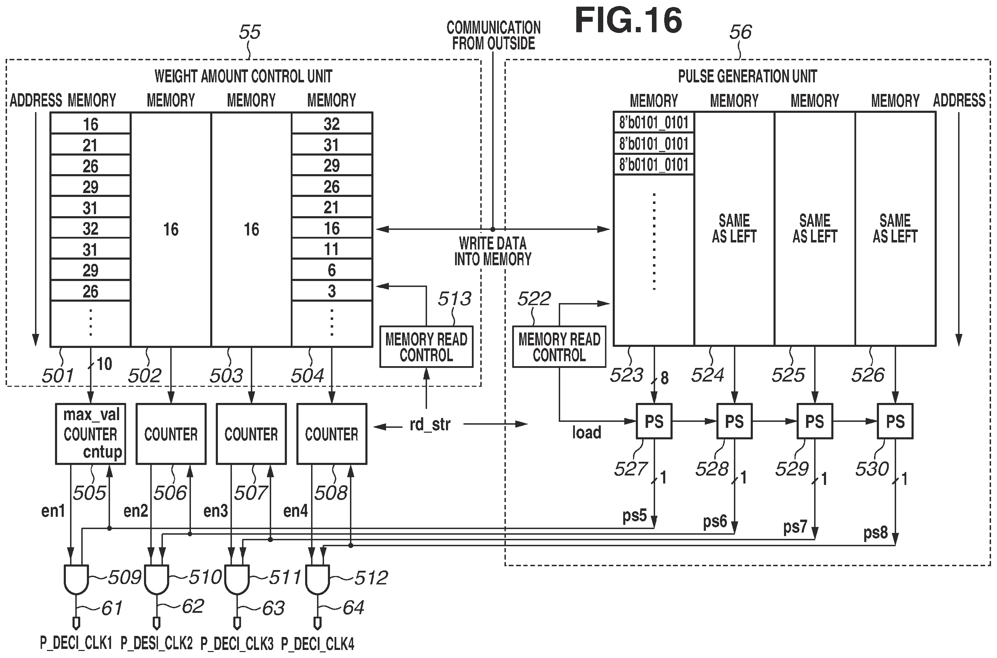

Fig. 16 illustrates an internal configuration of the weight control unit 53. In the present embodiment, the signals P_DECI_CLK1 to P_DECI_CLK4 are controlled by two units, that is, the weight amount control unit 55 and the pulse generation unit 56. Fig. 16 differs from Fig. 14 in the configuration of the pulse generation unit 56.

The pulse generation unit 56 illustrated in Fig. 16 includes a memory read control 522, four memories, that is, memories 523 to 526, and parallel/serial circuits PS 527 to PS 530.

In the four memories, that is, the memories 523 to 526, the address advances in the longitudinal direction of each memory. The readout operation from the four memories is controlled from the read control unit 522. The same address is designated in the four memories and the address is read out. For example, when an initial address is designated and read out, 8-bit data 8'b0101_0101 is read out from the memories 523 to 526.

At the next address, 8-bit data 8'b0101_0101 is also read out from the memories 523 to 526.

This 8-bit data is subjected to the parallel/serial conversion in the PS 527 at a signal load timing from the memory read control 522. Thus, PS 527 to PS 530 are output from the pulse generation unit 56 (ps5 to ps8 illustrated in the drawing).

The ps5 to ps8 signals output from the pulse generation unit 56 are input to the counters 505 to 508, respectively, and are also input to the AND circuits 509 to 512, respectively, in the same manner as in Figs. 12 to 14.

The counters 505 to 508 perform the count operation using the ps5 to ps8 signals, respectively, and continuously perform the operation until the value obtained by subtracting "1" from the value of data read out from the corresponding one of the memories 501 to 504 is reached, and then the signals en1 to en4 are set to the low level.

Next, the AND circuits 509 to 512 take logical ANDs between the signals en1 to en4 and the signals ps5 to ps8, respectively, and output the signals P_DECI_CLK1 to P_DECI_CLK4, respectively.

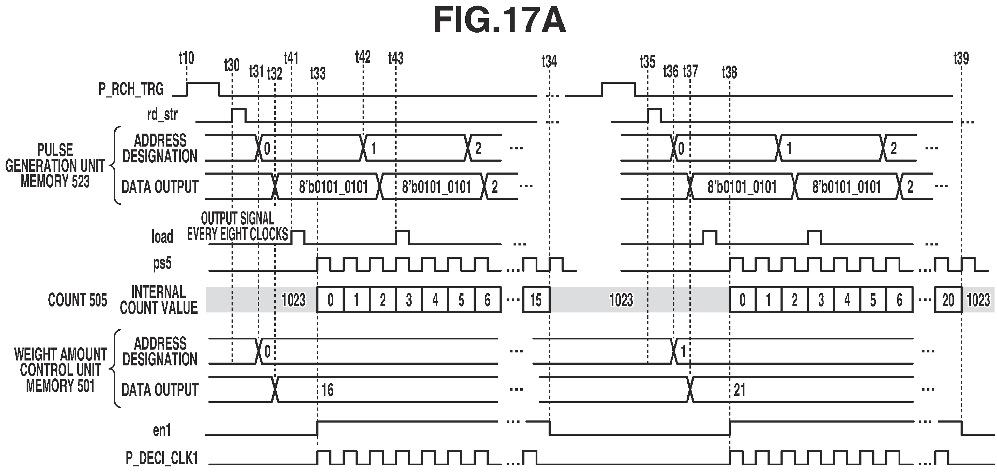

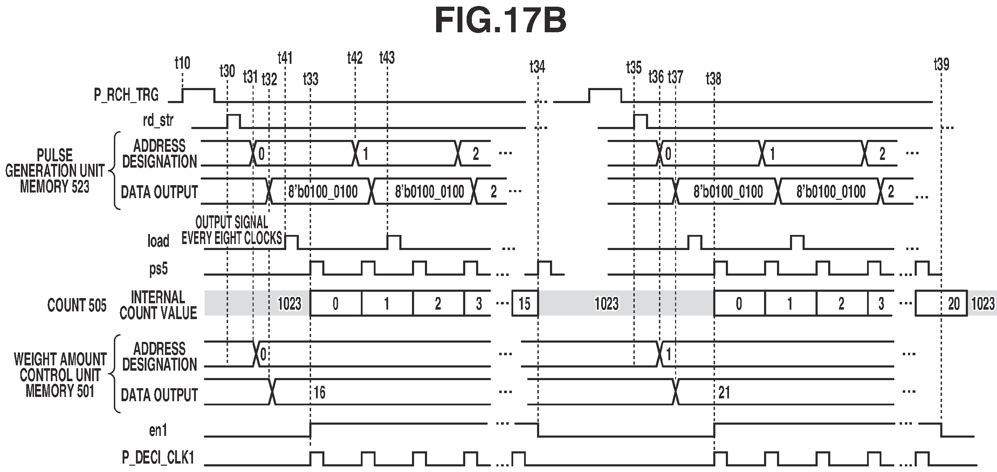

Figs. 17A and 17B are timing diagrams each illustrating an operation of the configuration illustrated in Fig. 16.

Fig. 17A illustrates pulse signals that are output from the pulse generation unit and continuously oscillate. Fig. 17B illustrates pulse signals at periodic intervals.

Like Figs. 13, 15A, and 15B, this timing diagram illustrates an operation timing from an operation on the memory 501 to an operation on the counter 505 in the weight amount control unit 55, and three other operation timings in the same circuit configuration are similar to those described above, and thus the descriptions thereof are omitted. The descriptions of contents similar to those illustrated in Figs. 13, 15A, and 15B are omitted and differences will be mainly described.

At time t10 illustrated in Fig. 17A, the signal P_RCH_TRG transitions to the high level and the subframe is started in the same manner as in Figs. 13, 15A, and 15B. At time t30, the readout control operation from the memory read control 513 and the memory read control 522 is started by the signal rd_str.

Next, at time t31, address designation in the memory 501 and the memory 523 is performed. At time t32, data 16 is output from the memory 501 and 8-bit binary data 8'b0101_0101 is output from the memory 523.

Next, at time t41, a signal load is issued during the period in which data is output from the memory 523. In this case, the signal load is output every eight clocks based on the 8-bit data.

This signal load allows the ps 527 to load parallel data and convert the parallel data into serial signals. This conversion allows the signal PS 5 to be output as a low-level signal when the 8-bit data is at the low level, and to be output as a high-level signal when the 8-bit data is at the high level.

At time t33, the counter 505 performs the count-up operation using the low-level/high-level signal of the signal ps5. The signal en1 output from the counter 505 is a signal that transitions to the high level during the count operation. The signal P_DECI_CLK1 output from the AND circuit 509 is output by the logical AND between the signal ps5 and the signal en1.

Next, at time t42, address designation in the memory 523 is performed again. At time t43, 8'b0101_0101 is also read out as 8-bit binary data. This readout operation is performed every eight clocks to sequentially read out 8-bit data and output continuous pulse signals ps5.

At the subsequent time t34, the counter 505 changes the level of the signal en1 to the low level at the value "15" obtained by subtracting "1" from data 16 read out from the memory 501. Thus, 16 pulses can be output as the signal P_DICE_CLK1.

Hereinafter, repeated descriptions of the same contents on the subsequent subframes are omitted.

Differences between Fig. 17B and Fig. 17A will be described.

In Fig. 17B, 8'b0100_0100 is held as 8-bit binary data in the memory 523. Accordingly, when parallel/serial conversion is performed using the signal load at time t41, one clock pulse is output every two clocks at time t33.

Thus, one clock pulse is output every two clocks also from the signal P_DECI_CLK1. This operation is performed 16 times, or 16 pulses are output.

The operation on the subsequent frames can be repeatedly performed in the same manner as the operation on the subframe as described above.

The use of the pulse generation unit 56 as described above makes it possible to adjust the pulse interval on data with the same weighting amount. Consequently, in addition to the advantageous effects of the first to fourth embodiments, the internal count operation speeds in the counters 505 to 508 can be individually set, so that current peaks can be distributed among the plurality of pixels (adjacent pixels) 110.

The operation speed of each of the counters 505 and 504 can be decreased depending on the weighting amount, thereby making it possible to obtain the effect of reducing power consumption.

(Seventh Embodiment)

A seventh embodiment is a modified example of the fourth to sixth embodiments.

In the present embodiment, the weight amount control unit 55 is not configured as a memory, but is configured as a circuit.

The setting of weighting corresponds to the acquisition of an optical flow in the present invention, and thus it is necessary to generate a sin waveform and a cos waveform. Therefore, in the present embodiment, a sin waveform is output as data to be output to the counter 505 and a cos waveform is output as data to be output to the counter 508 (not illustrated).

Next, an example of generating the sin waveform and the cos waveform will be described with reference to the following Equations (18), (19), (20), and (21).

[Equation 11]

$$f(n+1) \quad - \quad f(n) = k * g(n) \tag{18}$$

$$g(n+1) \quad - g(n) = - \quad k * f(n) \tag{19}$$

In the above equations, f (n) represents a sin function and g (n) represents a cos function.

Equation (18) indicates that the differentiation of the sin function corresponds to the cos function. Equation (19) indicates that the differentiation of the cos function corresponds to the -sin function.

The following equations are obtained by transforming the above equations.

[Equation 12]

$$f(n+1) = k * g(n) - f(n) \qquad (20)$$

$$g(n+1) = - k * f(n) + g(n) \qquad (21)$$

In these equations, an initial value f (0) is "0", g (0) is, for example, "30". A coefficient k, a value obtained by dividing one period "$2\pi$" of each of the sin and cos waveforms by "n" number is multiplied. Specifically, if one period of each of the sin and cos waveforms is represented using 1024 data points, the increment is $2\pi/1024$. When these arithmetic operations are performed, fractional parts appear. These values are rounded to integers to be output to the count 505 and the count 508. As described above, advantageous effects similar to those of the fourth to sixth embodiments can be obtained even when the weight amount control unit 55 incorporating these circuits is used.

(Eighth Embodiment)

Differences between an eighth embodiment and the seventh embodiment will be mainly described.
In the present embodiment, a method for reducing the capacity of a memory configured in the weight amount control unit 55 will be described.
The setting of weighting corresponds to the acquisition of an optical flow in the present invention, and thus it is necessary to generate a sin waveform and a cos waveform.
Since the sin waveform and the cos waveform are periodic functions, only a memory corresponding to a 1/2 cycle or a 1/4 cycle of each waveform may be sufficient to realize the present embodiment, instead of using the memory corresponding to one cycle of each waveform.

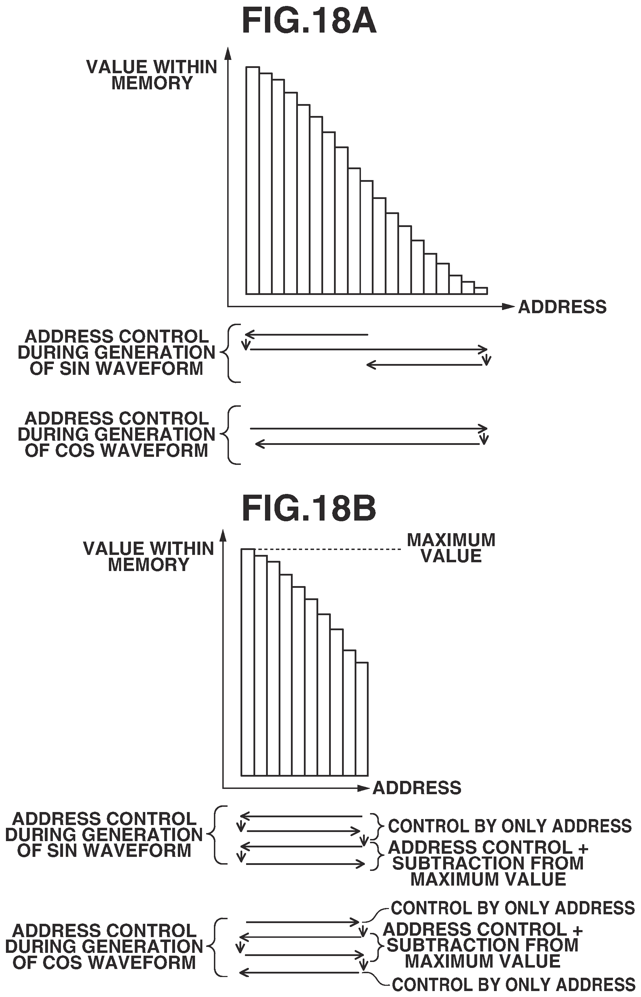

Fig. 18A illustrates a configuration in which data having only a 1/2 cycle of each of the sin function and the cos function is held in the memory. The horizontal axis indicates a memory address, which is represented as the vertical axis in Fig. 12. The vertical axis in Fig. 18A indicates the data value held in the memory.
The generation of a sin waveform using these pieces of data is realized only by address control as illustrated in Fig. 18A. Specifically, a decrement operation is performed on the range from the center address to the initial address. When the initial address is reached, an increment operation is performed to perform a control operation up to the maximum address illustrated in Fig. 18A. When the maximum address is reached, the decrement operation is performed again up to the center address.
Similarly, the generation of a cos waveform is realized only by address control. Specifically, the increment operation is performed from the initial address and when the maximum address is reached, the decrement operation is performed up to the initial address.
The address control as described above makes it possible to generate a sin waveform and a cos waveform. Consequently, the effect of reducing the capacity of the memory can be obtained.
Fig. 18B illustrates an example where data having only a 1/4 cycle of each of the sin and cos functions is held in the memory. The horizontal axis indicates the memory address, which is represented as the vertical axis in Fig. 12. The vertical axis illustrated in Fig. 18B indicates the held data value in the memory.
The generation of a sin waveform using these pieces of data is realized by address control while performing a data operation as illustrated in Fig. 18B. Specifically, the decrement operation is performed from the address maximum, and when the initial address is reached, the increment operation is performed. When the initial address is read out, this data is held separately. The above-described operation is performed only by address control. Then, the decrement operation is performed again. In this case, the address decrement operation is performed while subtracting the value of read data from the maximum value previously held. In this state, when the initial address is reached, the increment operation is performed again. Also, in this case, the address increment operation is performed while subtracting the value of read data from the maximum value previously held. The above-described operation makes it possible to generate a sin waveform.
Similarly, the generation of a cos waveform is realized by address control and data operation. Specifically, the increment operation is performed on the range from the initial address to the maximum address. In this case, only the address control is performed. When the initial address is read out, this data is held separately.
Next, the decrement operation is performed up to the initial address "0". In this case, the address decrement operation is performed while subtracting the value of read data from the maximum value previously held. In this state, when the initial address is reached, the increment operation is performed again. Also, in this case, the address increment operation is performed while subtracting the value of read data from the maximum value previously held.
When the maximum address is reached, the decrement operation is performed again. In this case, only the address control is performed. The above-described operation makes it possible to generate a cos waveform.
The address control during which the data operation is performed as well as described above makes it possible to generate a sin waveform and a cos waveform. Accordingly, the effect of reducing the capacity of the memory can be obtained.

(Ninth Embodiment)

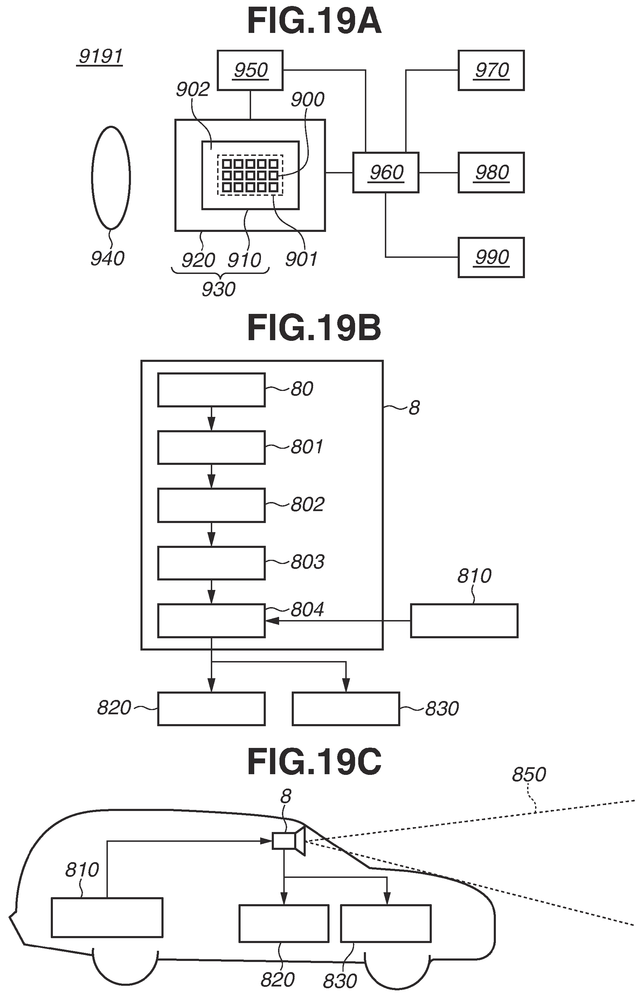

A ninth embodiment can be applied to any of the first to eight embodiments. Fig. 19A is a schematic diagram illustrating equipment 9191 including a semiconductor apparatus 930 according to the present embodiment. The semiconductor apparatus 930 may be any one of the semiconductor apparatuses described in the first to third embodiments, or may be a semiconductor apparatus obtained by combining a plurality of embodiments. The equipment 9191 including the semiconductor apparatus 930 will be described in detail. The semiconductor apparatus 930 may include a semiconductor device 910. The semiconductor apparatus 930 can include not only the semiconductor device 910, but also a package 920 that accommodates the semiconductor device 910. The package 920 can include a substrate onto which the semiconductor device 910 is fixed, and a lid such as glass facing the semiconductor device 910. The package 920 can further include a joining member such as a bonding wire or a bump to connect a terminal provided on the substrate with a terminal provided on the semiconductor device 910.

The equipment 9191 can include at least one of an optical apparatus 940, a control apparatus 950, a processing apparatus 960, a display apparatus 970, a storage apparatus 980, and a mechanical apparatus 990. The optical apparatus 940 is used for the semiconductor apparatus 930. The optical apparatus 940 is, for example, a lens, a shutter, or a mirror, and is an optical system that guides light to the semiconductor apparatus 930. The control apparatus 950 controls the semiconductor apparatus 930. The control apparatus 950 is a semiconductor apparatus such as an application-specific integrated circuit (ASIC).

The processing apparatus 960 processes a signal output from the semiconductor apparatus 930. The processing apparatus 960 is a semiconductor apparatus, such as a central processing unit (CPU) or an ASIC, to configure an analog front end (AFE) or a digital front end (DFE). The display apparatus 970 is an electroluminescence (EL) display apparatus or a liquid crystal display apparatus that displays information (image) obtained by the semiconductor apparatus 930. The storage apparatus 980 is a magnetic device or a semiconductor device that stores information (image) obtained by the semiconductor apparatus 930. The storage apparatus 980 is a volatile memory, such as a static random access memory (SRAM) or a dynamic RAM (DRAM), or a nonvolatile memory such as a flash memory or a hard disk drive. The processing apparatus 960 may acquire an optical flow using the signal output from the photoelectric conversion apparatus according to the embodiments described above. Specifically, the processing apparatus 960 may generate three images, that is, an image corresponding to a sin component, an image corresponding to a cos component, and a normal image, and may acquire an optical flow from the three images.

The mechanical apparatus 990 includes a movable unit or a propelling unit such as a motor or an engine. The equipment 9191 displays a signal output from the semiconductor apparatus 930 on the display apparatus 970, and transmits the signal to the outside using a communication apparatus (not illustrated) included in the equipment 9191. Accordingly, the equipment 9191 further can include the storage apparatus 980 and the processing apparatus 960 separately from the storage circuit and the arithmetic circuit included in the semiconductor apparatus 930. The mechanical apparatus 990 may be controlled based on the signal output from the semiconductor apparatus 930.

The equipment 9191 is suitable for an information terminal (for example, a smartphone or a wearable terminal) having an imaging function, and electronic equipment such as a camera (for example, an interchangeable lens camera, a compact camera, a video camera, or a monitoring camera). The mechanical apparatus 990 in a camera can drive the components of the optical apparatus 940 for zooming, focusing, and shutter operation. Alternatively, the mechanical apparatus 990 in a camera can move the semiconductor apparatus 930 for image stabilization operation.

The equipment 9191 can be transport equipment such as a vehicle, a ship, or a flight vehicle (drone, aircraft, or the like). The mechanical apparatus 990 in the transport equipment can be used as a moving apparatus. The equipment 9191 as the transport equipment can be equipment that transports the semiconductor apparatus 930 or equipment that assists and/or automates driving (piloting) by using the imaging function. The processing apparatus 960 for assisting and/or automating driving (piloting) can perform processing for operating the mechanical apparatus 990 as the moving apparatus based on information acquired by the semiconductor apparatus 930. Alternatively, the equipment 9191 may be medical equipment such as an endoscope, measurement equipment such as a ranging sensor, analytical equipment such as an electron microscope, office equipment such as a copier, or industrial equipment such as a robot.

According to the above-described embodiments, excellent pixel characteristics can be acquired. Accordingly, the value of the semiconductor apparatus can be increased. Here, the increase in the value corresponds to at least one of addition of a function, improvement of performance, improvement of characteristics, improvement of reliability, improvement of production yield, reduction of environmental burden, cost reduction, size reduction, and weight reduction.

Accordingly, when the semiconductor apparatus 930 according to the present embodiment is used for the equipment 9191, the value of the equipment can be improved. For example, excellent performance can be acquired when external images of the transport equipment are captured or an external environment is measured with the semiconductor apparatus 930 mounted on the transport equipment. Therefore, in the manufacture or the sales of the transport equipment, determining mounting of the semiconductor apparatus according to the present embodiment on transport equipment is advantageous in that the performance of the transport equipment itself is improved. In particular, the semiconductor apparatus 930 can be suitably used for the transport equipment that assists and/or automates driving of the transport equipment by using information acquired by the semiconductor apparatus.

A photoelectric conversion system and a moving body according to the present embodiment are described with reference to Figs. 19B and 19C.

Fig. 19A illustrates an example of the photoelectric conversion system for an on-vehicle camera. A photoelectric conversion system 8 includes a photoelectric conversion apparatus 80. The photoelectric conversion apparatus 80 is the photoelectric conversion apparatus (image capturing apparatus) described in any one of the above-described embodiments. The photoelectric conversion system 8 includes an image processing unit 801 that performs image processing on a plurality of pieces of image data acquired by the photoelectric conversion apparatus 80, and a parallax acquisition unit 802 that calculates a parallax (phase difference between parallax images) based on a plurality of pieces of image data acquired by the photoelectric conversion system 8. In this case, the photoelectric conversion system 8 may include, for example, an optical system (not illustrated) such as a lens, a shutter, or a mirror to guide light to the photoelectric conversion apparatus 80. Further, a plurality of photoelectric conversion units substantially conjugate to the pupil of the optical system may be disposed in each pixel included in the photoelectric conversion apparatus 80. For example, the plurality of photoelectric conversion units substantially conjugate to the pupil is disposed so as to correspond to a single microlens. When the plurality of photoelectric conversion units receives light beams having passed through mutually different positions of the pupil of the optical system, the photoelectric conversion apparatus 80 outputs image data corresponding to the light beams having passed through the different positions. Then, the parallax acquisition unit 802 may calculate the parallax by using the output image data. Further, the photoelectric conversion system 8 includes a distance acquisition unit 803 that calculates a distance to an object based on the calculated parallax, and a crash determination unit 804 that determines whether there is a possibility of a crash based on the calculated distance. Here, the parallax acquisition unit 802 and the distance acquisition unit 803 are examples of a distance information acquisition unit configured to acquire information about a distance to an object. Specifically, the distance information is information about a parallax, a defocusing amount, a distance to an object, and the like. The crash determination unit 804 may determine the crash possibility by using any of the pieces of distance information. The distance information may be acquired by using the Time of Flight (TOF) technique. The distance information acquisition unit may be implemented by exclusively designed hardware or a software module. Further, the distance information acquisition unit may be implemented by a field programmable gate array (FPGA), an ASIC, or the like or by a combination thereof.

The photoelectric conversion system 8, which is connected to a vehicle information acquisition apparatus 810, can acquire vehicle information such as a vehicle speed, a yaw rate, and a steering angle. The photoelectric conversion system 8 is also connected to a control electronic control unit (ECU) 820 as a control apparatus to output a control signal to generate a braking force for a vehicle based on a determination result from the crash determination unit 804. The photoelectric conversion system 8 is also connected to a warning apparatus 830 that warns a driver based on the determination result from the crash determination unit 804. For example, if the crash possibility is high based on the determination result from the crash determination unit 804, the control ECU 820 brakes, releases the accelerator, suppresses engine output, or performs other operation to control the vehicle to avoid a crash or reduce damage. The warning apparatus 830 warns a user by, for example, giving warning with a sound or the like, displaying warning information on a screen of a car navigation system or the like, or applying vibration to a seatbelt or a steering wheel.

In the present embodiment, an image of an area around the vehicle, for example, a front area or a rear area is captured by the photoelectric conversion system 8. Fig. 19C illustrates the photoelectric conversion system in the case of capturing an image of a front area of the vehicle (image capturing range 850). The vehicle information acquisition apparatus 810 transmits an instruction to the photoelectric conversion system 8 or the photoelectric conversion apparatus 80. With such a configuration, the accuracy of measuring the distance can be improved.

While the present embodiment described above illustrates an example of a control operation for preventing the vehicle from colliding with another vehicle, the present embodiment can also be applied to, for example, a control operation for automatic driving by following another vehicle, and a control operation for automatic driving to prevent the vehicle from deviating from a lane. Further, the photoelectric conversion system can be applied not only to a vehicle, such as an automobile, but also to, for example, a moving body (moving apparatus), such as a ship, an aircraft, or an industrial robot. In addition, the photoelectric conversion system can be applied not only to a moving body, but also to equipment that widely uses object recognition, such as an intelligent transportation system (ITS).

The embodiments described above can be changed as appropriate without departing from the technical idea. The content of the disclosure herein includes not only the explicit description herein but also all the items understandable herein and from the attached drawings. The content of the disclosure herein includes complements of individual concepts described herein. That is, for example, when a description indicating that "A is greater than B" is included herein, it can be said that a description indicating that "A is not greater than B" is also disclosed herein even when the description indicating that "A is not greater than B" is omitted. The reason for this is that, when the description indicating that "A is greater than B" is included, this description is made on the assumption that the case where "A is not greater than B" is taken into consideration.

The technique according to the present disclosure includes the following configurations.

(Configuration 1)

A photoelectric conversion apparatus comprising:

an avalanche photodiode; and

an integration circuit configured to integrate an output signal from the avalanche photodiode by predetermined weighting corresponding to acquisition of an optical flow.

(Configuration 2)

A photoelectric conversion apparatus comprising:

an avalanche photodiode;
a first integration circuit configured to integrate an output signal from the avalanche photodiode; and
a second integration circuit configured to integrate the output signal,
wherein a weighting amount used for integration of the output signal by the first integration circuit is different from a weighting amount used for integration of the output signal by the second integration circuit.

(Configuration 3)

The photoelectric conversion apparatus according to Configuration 2, wherein a weighting amount used for integration of the output signal by the first integration circuit at predetermined time is different from a weighting amount used for integration of the output signal by the second integration circuit at the predetermined time.

(Configuration 4)

The photoelectric conversion apparatus according to Configuration 2 or 3,

wherein the first integration circuit integrates the output signal based on a coefficient corresponding to a sin component, and

wherein the second integration circuit integrates the output signal based on a coefficient corresponding to a cos component.

(Configuration 5)

The photoelectric conversion apparatus according to any one of Configurations 2 to 4, further comprising a third integration circuit configured to integrate the output signal,
wherein the third integration circuit performs an integration operation based on a constant coefficient during a period in which the first integration circuit performs an integration operation.

(Configuration 6)

The photoelectric conversion apparatus according to any one of Configurations 1 to 5, further comprising a waveform shaping unit connected to the avalanche photodiode,
wherein the output signal is an output from the waveform shaping unit.

(Configuration 7)

The photoelectric conversion apparatus according to any one of Configurations 2 to 6, further comprising a first waveform generation unit configured to output a pulse signal at a high level in a cycle corresponding to a sin component,
wherein the first integration circuit integrates the output signal by using the first waveform generation unit and the output signal.

(Configuration 8)

The photoelectric conversion apparatus according to Configuration 7, further comprising a second waveform generation unit configured to output a pulse signal at a high level in a cycle corresponding to a cos component, wherein the second integration circuit integrates the output signal by using the second waveform generation unit and the output signal.

(Configuration 9)

The photoelectric conversion apparatus according to Configuration 1, further comprising:

a first logic circuit configured to output a first pulse signal by using a plurality of pulse signals to be input;
a quench element connected to the avalanche photodiode and configured to receive the first pulse signal;
a waveform shaping unit connected to the avalanche photodiode;
a second logic circuit connected to the waveform shaping unit; and
a third logic circuit configured to output a second pulse signal by using an output from the second logic circuit and some of the plurality of pulse signals,
wherein the integration circuit performs the integration using an output from the third logic circuit.

(Configuration 10)

The photoelectric conversion apparatus according to any one of Configurations 2 to 8, further comprising:

a first logic circuit configured to output a first pulse signal by using a plurality of pulse signals to be input;
a quench element connected to the avalanche photodiode and configured to receive the first pulse signal;
a waveform shaping unit connected to the avalanche photodiode;
a second logic circuit connected to the waveform shaping unit; and
a third logic circuit configured to output a second pulse signal by using an output from the second logic circuit and some of the plurality of pulse signals,
wherein the first integration circuit performs the integration using an output from the third logic circuit.

(Configuration 11)

The photoelectric conversion apparatus according to Configuration 5, further comprising:

a first logic circuit configured to output a first pulse signal by using a plurality of pulse signals to be input;
a quench element connected to the avalanche photodiode and configured to receive the first pulse signal;
a waveform shaping unit connected to the avalanche photodiode;
a second logic circuit connected to the waveform shaping unit;
a third logic circuit configured to output a second pulse signal by using an output from the second logic circuit and some of the plurality of pulse signals; and
a fourth logic circuit configured to generate a third pulse signal by using some of the plurality of pulse signals and an output from the second logic circuit,
wherein the first integration circuit performs the integration using an output from the third logic circuit, and
wherein the third integration circuit performs the integration using an output from the fourth logic circuit.

(Configuration 12)

The photoelectric conversion apparatus according to Configuration 1, further comprising:

a first logic circuit configured to output a first pulse signal by using a plurality of pulse signals to be input;
a quench element connected to the avalanche photodiode and configured to receive the first pulse signal;
a waveform shaping unit connected to the avalanche photodiode;
a second logic circuit connected to the waveform shaping unit;
a third logic circuit configured to output a second pulse signal by using an output from the second logic circuit and some of the plurality of pulse signals;

a fourth logic circuit configured to generate a third pulse signal by using some of the plurality of pulse signals and an output from the second logic circuit; and

an operator,

wherein the integration circuit performs the integration using an output from the third logic circuit, and

wherein the operator multiplies a signal held in the integration circuit by using an output from the fourth logic circuit.

(Configuration 13)

The photoelectric conversion apparatus according to Configuration 2, further comprising:

a weight amount control unit configured to output a weight amount; and

a measurement unit configured to measure the weight amount,

wherein a signal obtained by converting the weight amount into the number of pulses provides a weighting amount to each of the first integration circuit and the second integration circuit.

(Configuration 14)

The photoelectric conversion apparatus according to Configuration 2, further comprising:

a weight amount control unit configured to output a weight amount;

a measurement unit configured to measure the weight amount; and

a pulse generation unit configured to provide a pulse to the measurement unit,

wherein a pulse signal to be output at a timing when the pulse is issued is converted into a number of pulses corresponding to a number of times of issuance of pulses to be continued until the weight amount is reached, and a signal corresponding to the number of pulses provides a weighting amount to each of the first integration circuit and the second integration circuit.

(Configuration 15)

The photoelectric conversion apparatus according to Configuration 13, wherein the weight amount control unit includes a holding unit configured to hold a predetermined value for the measurement unit, and reads out the predetermined value held in the holding unit to provide a weighting amount to each of the first integration circuit and the second integration circuit.

(Configuration 16)

The photoelectric conversion apparatus according to Configuration 13,

wherein the weight amount control unit includes a holding unit configured to hold a predetermined value for the measurement unit, and the holding unit holds a signal having a first value and a signal having a second value, and

wherein the weight amount control unit reads out the signal having the first value and the signal having the second value from the holding unit to generate a pulse signal, and the measurement unit driven by the pulse signal provides a weighting amount to each of the first integration circuit and the second integration circuit.

(Configuration 17)

The photoelectric conversion apparatus according to Configuration 13, wherein the weight amount control unit includes an arithmetic circuit configured to generate a calculated value by calculating each of a coefficient corresponding to a sin component and a coefficient corresponding to a cos component, and the measurement unit driven with the calculated value as a maximum value provides a weighting amount to each of the first integration circuit and the second integration circuit.

(Configuration 18)

The photoelectric conversion apparatus according to Configuration 14, wherein the measurement unit generates a periodic pulse signal based on a setting value, and the measurement unit configured to measure the weight amount using the periodic pulse signal provides a weighting amount to each of the first integration circuit and the second integration circuit.

(Configuration 19)

The photoelectric conversion apparatus according to Configuration 13, wherein the maximum value is a 1/2 cycle of a coefficient corresponding to a sin component and is a 1/2 cycle of a coefficient corresponding to a cos component, and the measurement unit driven with the weight amount corresponding to one cycle provides a weighting amount to each of the first integration circuit and the second integration circuit.

(Configuration 20)

The photoelectric conversion apparatus according to Configuration 13, wherein the maximum value is a 1/4 cycle of a coefficient corresponding to a sin component and is a 1/4 cycle of a coefficient corresponding to a cos component, and the measurement unit driven with the weight amount corresponding to one cycle provides a weighting amount to each of the first integration circuit and the second integration circuit.

(Configuration 21)

Equipment comprising the photoelectric conversion apparatus according to any one of Configurations 1 to 20, wherein the equipment further comprises at least any one of:

an optical apparatus used for the photoelectric conversion apparatus;
a control apparatus configured to control the photoelectric conversion apparatus;
a processing apparatus configured to process a signal output from the photoelectric conversion apparatus;
a display apparatus configured to display information obtained by the photoelectric conversion apparatus;
a storage apparatus configured to store information obtained by the photoelectric conversion apparatus; and
a mechanical apparatus configured to operate based on information obtained by the photoelectric conversion apparatus.

(Configuration 22)

Equipment comprising:

the photoelectric conversion apparatus according to any one of Configurations 1 to 21; and
a processing apparatus configured to process a signal output from the photoelectric conversion apparatus,
wherein the processing apparatus acquires an optical flow by using the signal output from the photoelectric conversion apparatus.

The present invention is not limited to the above embodiments and various changes and modifications can be made within the spirit and scope of the present invention. Therefore, to apprise the public of the scope of the present invention, the following claims are made.
This application claims priority from Japanese Patent Applications No. 2023-123703, filed July 28, 2023, and No. 2024-113102, filed July 16, 2024, which are hereby incorporated by reference herein in their entirety.

Reference Signs List

201    avalanche photodiode
202    quench unit
210    waveform shaping unit
211    integration unit
211-1   first integration circuit
211-2   second integration circuit
211-3   third integration circuit
212    selection circuit
311    sin waveform generation unit
313    cos waveform generation unit

**Claims**

**1.** A photoelectric conversion apparatus comprising:

an avalanche photodiode; and
an integration circuit configured to integrate an output signal from the avalanche photodiode by predetermined weighting corresponding to acquisition of an optical flow.

**2.** A photoelectric conversion apparatus comprising:

an avalanche photodiode;
a first integration circuit configured to integrate an output signal from the avalanche photodiode; and
a second integration circuit configured to integrate the output signal,
wherein a weighting amount used for integration of the output signal by the first integration circuit is different from a weighting amount used for integration of the output signal by the second integration circuit.

**3.** The photoelectric conversion apparatus according to Claim 2, wherein a weighting amount used for integration of the output signal by the first integration circuit at predetermined time is different from a weighting amount used for integration of the output signal by the second integration circuit at the predetermined time.

**4.** The photoelectric conversion apparatus according to Claim 2,

wherein the first integration circuit integrates the output signal based on a coefficient corresponding to a sin component, and
wherein the second integration circuit integrates the output signal based on a coefficient corresponding to a cos component.

**5.** The photoelectric conversion apparatus according to Claim 2, further comprising a third integration circuit configured to integrate the output signal,
wherein the third integration circuit performs an integration operation based on a constant coefficient during a period in which the first integration circuit performs an integration operation.

**6.** The photoelectric conversion apparatus according to Claim 1, further comprising a waveform shaping unit connected to the avalanche photodiode,
wherein the output signal is an output from the waveform shaping unit.

**7.** The photoelectric conversion apparatus according to Claim 2, further comprising a waveform shaping unit connected to the avalanche photodiode,
wherein the output signal is an output from the waveform shaping unit.

**8.** The photoelectric conversion apparatus according to Claim 2, further comprising a first waveform generation unit configured to output a pulse signal at a high level in a cycle corresponding to a sin component,
wherein the first integration circuit integrates the output signal by using the first waveform generation unit and the output signal.

**9.** The photoelectric conversion apparatus according to Claim 8, further comprising a second waveform generation unit configured to output a pulse signal at a high level in a cycle corresponding to a cos component,
wherein the second integration circuit integrates the output signal by using the second waveform generation unit and the output signal.

**10.** The photoelectric conversion apparatus according to Claim 1, further comprising:

a first logic circuit configured to output a first pulse signal by using a plurality of pulse signals to be input;
a quench element connected to the avalanche photodiode and configured to receive the first pulse signal;
a waveform shaping unit connected to the avalanche photodiode;
a second logic circuit connected to the waveform shaping unit; and
a third logic circuit configured to output a second pulse signal by using an output from the second logic circuit and some of the plurality of pulse signals,

wherein the integration circuit performs the integration using an output from the third logic circuit.

11. The photoelectric conversion apparatus according to Claim 2, further comprising:

a first logic circuit configured to output a first pulse signal by using a plurality of pulse signals to be input;
a quench element connected to the avalanche photodiode and configured to receive the first pulse signal;
a waveform shaping unit connected to the avalanche photodiode;
a second logic circuit connected to the waveform shaping unit; and
a third logic circuit configured to output a second pulse signal by using an output from the second logic circuit and some of the plurality of pulse signals,
wherein the first integration circuit performs the integration using an output from the third logic circuit.

12. The photoelectric conversion apparatus according to Claim 5, further comprising:

a first logic circuit configured to output a first pulse signal by using a plurality of pulse signals to be input;
a quench element connected to the avalanche photodiode and configured to receive the first pulse signal;
a waveform shaping unit connected to the avalanche photodiode;
a second logic circuit connected to the waveform shaping unit;
a third logic circuit configured to output a second pulse signal by using an output from the second logic circuit and some of the plurality of pulse signals; and
a fourth logic circuit configured to generate a third pulse signal by using some of the plurality of pulse signals and an output from the second logic circuit,
wherein the first integration circuit performs the integration using an output from the third logic circuit, and
wherein the third integration circuit performs the integration using an output from the fourth logic circuit.

13. The photoelectric conversion apparatus according to Claim 1, further comprising:

a first logic circuit configured to output a first pulse signal by using a plurality of pulse signals to be input;
a quench element connected to the avalanche photodiode and configured to receive the first pulse signal;
a waveform shaping unit connected to the avalanche photodiode;
a second logic circuit connected to the waveform shaping unit;
a third logic circuit configured to output a second pulse signal by using an output from the second logic circuit and some of the plurality of pulse signals;
a fourth logic circuit configured to generate a third pulse signal by using some of the plurality of pulse signals and an output from the second logic circuit; and
an operator,
wherein the integration circuit performs the integration using an output from the third logic circuit, and
wherein the operator multiplies a signal held in the integration circuit by using an output from the fourth logic circuit.

14. The photoelectric conversion apparatus according to Claim 2, further comprising:

a weight amount control unit configured to output a weight amount; and
a measurement unit configured to measure the weight amount,
wherein a signal obtained by converting the weight amount into the number of pulses provides a weighting amount to each of the first integration circuit and the second integration circuit.

15. The photoelectric conversion apparatus according to Claim 2, further comprising:

a weight amount control unit configured to output a weight amount;
a measurement unit configured to measure the weight amount; and
a pulse generation unit configured to provide a pulse to the measurement unit,
wherein a pulse signal to be output at a timing when the pulse is issued is converted into a number of pulses corresponding to a number of times of issuance of pulses to be continued until the weight amount is reached, and
a signal corresponding to the number of pulses provides a weighting amount to each of the first integration circuit and the second integration circuit.

16. The photoelectric conversion apparatus according to Claim 14, wherein the weight amount control unit includes a holding unit configured to hold a predetermined value for the measurement unit, and reads out the predetermined value held in the holding unit to provide a weighting amount to each of the first integration circuit and the second integration circuit.

**17.** The photoelectric conversion apparatus according to Claim 14,

wherein the weight amount control unit includes a holding unit configured to hold a predetermined value for the measurement unit, and the holding unit holds a signal having a first value and a signal having a second value, and wherein the weight amount control unit reads out the signal having the first value and the signal having the second value from the holding unit to generate a pulse signal, and the measurement unit driven by the pulse signal provides a weighting amount to each of the first integration circuit and the second integration circuit.

**18.** The photoelectric conversion apparatus according to Claim 14, wherein the weight amount control unit includes an arithmetic circuit configured to generate a calculated value by calculating each of a coefficient corresponding to a sin component and a coefficient corresponding to a cos component, and the measurement unit driven with the calculated value as a maximum value provides a weighting amount to each of the first integration circuit and the second integration circuit.

**19.** The photoelectric conversion apparatus according to Claim 15, wherein the measurement unit generates a periodic pulse signal based on a setting value, and the measurement unit configured to measure the weight amount using the periodic pulse signal provides a weighting amount to each of the first integration circuit and the second integration circuit.

**20.** The photoelectric conversion apparatus according to Claim 18, wherein the maximum value is a 1/2 cycle of the coefficient corresponding to the sin component and is a 1/2 cycle of the coefficient corresponding to the cos component, and the measurement unit driven with the weight amount corresponding to one cycle provides a weighting amount to each of the first integration circuit and the second integration circuit.

**21.** The photoelectric conversion apparatus according to Claim 18, wherein the maximum value is a 1/4 cycle of the coefficient corresponding to the sin component and is a 1/4 cycle of the coefficient corresponding to the cos component, and the measurement unit driven with the weight amount corresponding to one cycle provides a weighting amount to each of the first integration circuit and the second integration circuit.

**22.** Equipment comprising the photoelectric conversion apparatus according to any one of Claims 1 to 21, wherein the equipment further comprises at least any one of:

an optical apparatus used for the photoelectric conversion apparatus;
a control apparatus configured to control the photoelectric conversion apparatus;
a processing apparatus configured to process a signal output from the photoelectric conversion apparatus;
a display apparatus configured to display information obtained by the photoelectric conversion apparatus;
a storage apparatus configured to store information obtained by the photoelectric conversion apparatus; and
a mechanical apparatus configured to operate based on information obtained by the photoelectric conversion apparatus.

**23.** Equipment comprising:

the photoelectric conversion apparatus according to any one of Claims 1 to 21; and
a processing apparatus configured to process a signal output from the photoelectric conversion apparatus,
wherein the processing apparatus acquires an optical flow by using the signal output from the photoelectric conversion apparatus.

**1.** A photoelectric conversion apparatus comprising:

an avalanche photodiode; and
an integration circuit configured to integrate an output signal from the avalanche photodiode by predetermined weighting corresponding to acquisition of an optical flow,
wherein the integration circuit integrates the output signal with a weighting amount greater than 1.

**2.** A photoelectric conversion apparatus comprising:

an avalanche photodiode;

a first integration circuit configured to integrate an output signal from the avalanche photodiode; and

a second integration circuit configured to integrate the output signal,

wherein a weighting amount used for integration of the output signal by the first integration circuit is different from a weighting amount used for integration of the output signal by the second integration circuit, and

wherein at least one of the first integration circuit and the second integration circuit integrates the output signal with a weighting amount greater than 1.

3. The photoelectric conversion apparatus according to Claim 2, wherein a weighting amount used for integration of the output signal by the first integration circuit at predetermined time is different from a weighting amount used for integration of the output signal by the second integration circuit at the predetermined time.

4. The photoelectric conversion apparatus according to Claim 2,

wherein the first integration circuit integrates the output signal based on a coefficient corresponding to a sin component, and

wherein the second integration circuit integrates the output signal based on a coefficient corresponding to a cos component.

5. The photoelectric conversion apparatus according to Claim 2, further comprising a third integration circuit configured to integrate the output signal,

wherein the third integration circuit performs an integration operation based on a constant coefficient during a period in which the first integration circuit performs an integration operation.

6. The photoelectric conversion apparatus according to Claim 1, further comprising a waveform shaping unit connected to the avalanche photodiode,

wherein the output signal is an output from the waveform shaping unit.

7. The photoelectric conversion apparatus according to Claim 2, further comprising a waveform shaping unit connected to the avalanche photodiode,

wherein the output signal is an output from the waveform shaping unit.

8. The photoelectric conversion apparatus according to Claim 2, further comprising a first waveform generation unit configured to output a pulse signal at a high level in a cycle corresponding to a sin component,

wherein the first integration circuit integrates the output signal by using the first waveform generation unit and the output signal.

9. The photoelectric conversion apparatus according to Claim 8, further comprising a second waveform generation unit configured to output a pulse signal at a high level in a cycle corresponding to a cos component,

wherein the second integration circuit integrates the output signal by using the second waveform generation unit and the output signal.

10. The photoelectric conversion apparatus according to Claim 1, further comprising:

a first logic circuit configured to output a first pulse signal by using a plurality of pulse signals to be input;

a quench element connected to the avalanche photodiode and configured to receive the first pulse signal;

a waveform shaping unit connected to the avalanche photodiode;

a second logic circuit connected to the waveform shaping unit; and

a third logic circuit configured to output a second pulse signal by using an output from the second logic circuit and some of the plurality of pulse signals,

wherein the integration circuit performs the integration using an output from the third logic circuit.

11. The photoelectric conversion apparatus according to Claim 2, further comprising:

a first logic circuit configured to output a first pulse signal by using a plurality of pulse signals to be input;

a quench element connected to the avalanche photodiode and configured to receive the first pulse signal;

a waveform shaping unit connected to the avalanche photodiode;

a second logic circuit connected to the waveform shaping unit; and

a third logic circuit configured to output a second pulse signal by using an output from the second logic circuit and some of the plurality of pulse signals,

wherein the first integration circuit performs the integration using an output from the third logic circuit.

12. The photoelectric conversion apparatus according to Claim 5, further comprising:

a first logic circuit configured to output a first pulse signal by using a plurality of pulse signals to be input;
a quench element connected to the avalanche photodiode and configured to receive the first pulse signal;
a waveform shaping unit connected to the avalanche photodiode;
a second logic circuit connected to the waveform shaping unit;
a third logic circuit configured to output a second pulse signal by using an output from the second logic circuit and some of the plurality of pulse signals; and
a fourth logic circuit configured to generate a third pulse signal by using some of the plurality of pulse signals and an output from the second logic circuit,
wherein the first integration circuit performs the integration using an output from the third logic circuit, and
wherein the third integration circuit performs the integration using an output from the fourth logic circuit.

13. The photoelectric conversion apparatus according to Claim 1, further comprising:

a first logic circuit configured to output a first pulse signal by using a plurality of pulse signals to be input;
a quench element connected to the avalanche photodiode and configured to receive the first pulse signal;
a waveform shaping unit connected to the avalanche photodiode;
a second logic circuit connected to the waveform shaping unit;
a third logic circuit configured to output a second pulse signal by using an output from the second logic circuit and some of the plurality of pulse signals;
a fourth logic circuit configured to generate a third pulse signal by using some of the plurality of pulse signals and an output from the second logic circuit; and
an operator,
wherein the integration circuit performs the integration using an output from the third logic circuit, and
wherein the operator multiplies a signal held in the integration circuit by using an output from the fourth logic circuit.

14. The photoelectric conversion apparatus according to Claim 2, further comprising:

a weight amount control unit configured to output a weight amount; and
a measurement unit configured to measure the weight amount,
wherein a signal obtained by converting the weight amount into the number of pulses provides a weighting amount to each of the first integration circuit and the second integration circuit.

15. The photoelectric conversion apparatus according to Claim 2, further comprising:

a weight amount control unit configured to output a weight amount;
a measurement unit configured to measure the weight amount; and
a pulse generation unit configured to provide a pulse to the measurement unit,
wherein a pulse signal to be output at a timing when the pulse is issued is converted into a number of pulses corresponding to a number of times of issuance of pulses to be continued until the weight amount is reached, and
a signal corresponding to the number of pulses provides a weighting amount to each of the first integration circuit and the second integration circuit.

16. The photoelectric conversion apparatus according to Claim 14, wherein the weight amount control unit includes a holding unit configured to hold a predetermined value for the measurement unit, and reads out the predetermined value held in the holding unit to provide a weighting amount to each of the first integration circuit and the second integration circuit.

17. The photoelectric conversion apparatus according to Claim 14,

wherein the weight amount control unit includes a holding unit configured to hold a predetermined value for the measurement unit, and the holding unit holds a signal having a first value and a signal having a second value, and
wherein the weight amount control unit reads out the signal having the first value and the signal having the second value from the holding unit to generate a pulse signal, and the measurement unit driven by the pulse signal provides a weighting amount to each of the first integration circuit and the second integration circuit.

**18.** The photoelectric conversion apparatus according to Claim 14, wherein the weight amount control unit includes an arithmetic circuit configured to generate a calculated value by calculating each of a coefficient corresponding to a sin component and a coefficient corresponding to a cos component, and the measurement unit driven with the calculated value as a maximum value provides a weighting amount to each of the first integration circuit and the second integration circuit.

**19.** The photoelectric conversion apparatus according to Claim 15, wherein the measurement unit generates a periodic pulse signal based on a setting value, and the measurement unit configured to measure the weight amount using the periodic pulse signal provides a weighting amount to each of the first integration circuit and the second integration circuit.

**20.** The photoelectric conversion apparatus according to Claim 18, wherein the maximum value is a 1/2 cycle of the coefficient corresponding to the sin component and is a 1/2 cycle of the coefficient corresponding to the cos component, and the measurement unit driven with the weight amount corresponding to one cycle provides a weighting amount to each of the first integration circuit and the second integration circuit.

**21.** The photoelectric conversion apparatus according to Claim 18, wherein the maximum value is a 1/4 cycle of the coefficient corresponding to the sin component and is a 1/4 cycle of the coefficient corresponding to the cos component, and the measurement unit driven with the weight amount corresponding to one cycle provides a weighting amount to each of the first integration circuit and the second integration circuit.

**22.** A photoelectric conversion apparatus comprising:

a plurality of pixels each including an avalanche photodiode and an integration circuit configured to integrate an output signal from the avalanche photodiode,
wherein the plurality of pixels includes a first pixel, a second pixel, and a third pixel, and
wherein a weighting amount for the integration circuit in the first pixel, a weighting amount for the integration circuit in the second pixel, and a weighting amount for the integration circuit in the third pixel are different from each other.

**23.** The photoelectric conversion apparatus according to Claim 22,

wherein the plurality of pixels further includes a fourth pixel, and
wherein the weighting amount for the integration circuit in the first pixel, the weighting amount for the integration circuit in the second pixel, the weighting amount for the integration circuit in the third pixel, and a weighting amount for the integration circuit in the fourth pixel are different from each other.

**24.** Equipment comprising the photoelectric conversion apparatus according to any one of Claims 1 to 23, wherein the equipment further comprises at least any one of:

an optical apparatus used for the photoelectric conversion apparatus;
a control apparatus configured to control the photoelectric conversion apparatus;
a processing apparatus configured to process a signal output from the photoelectric conversion apparatus;
a display apparatus configured to display information obtained by the photoelectric conversion apparatus;
a storage apparatus configured to store information obtained by the photoelectric conversion apparatus; and
a mechanical apparatus configured to operate based on information obtained by the photoelectric conversion apparatus.

**25.** Equipment comprising:

the photoelectric conversion apparatus according to any one of Claims 1 to 23; and
a processing apparatus configured to process a signal output from the photoelectric conversion apparatus,
wherein the processing apparatus acquires an optical flow by using the signal output from the photoelectric conversion apparatus.

# FIG.1

# FIG.2

WEIGHTING
AMOUNT

WEIGHT

UNIT EXPOSURE PERIOD
(MAIN FRAME)

TIME

SUB-EXPOSURE
PERIOD
(SUBFRAME)

# FIG.3

# FIG.4

# FIG.5A

VH

202

node A

210

node B

201

VL

# FIG.5B

INCIDENCE
OF PHOTON

node A
OUTPUT

DETERMINATION
THRESHOLD

TIME

t0    t1  t2    t3

# FIG.5C

node B
OUTPUT

TIME

# FIG.6

# FIG.7

EP 4 757 339 A1

# FIG.8

EP 4 757 339 A1

# FIG.9

EP 4 757 339 A1

# FIG.10

# FIG.11

EP 4 757 339 A1

# FIG.12

COMMUNICATION FROM OUTSIDE

55

**WEIGHT AMOUNT CONTROL UNIT**

ADDRESS

| MEMORY | MEMORY | MEMORY | MEMORY |
|--------|--------|--------|--------|
| 16 | | | 32 |
| 21 | | | 31 |
| 26 | | | 29 |
| 29 | 16 | 16 | 26 |
| 31 | | | 21 |
| 32 | | | 16 |
| 31 | | | 11 |
| 29 | | | 6 |
| 26 | | | 3 |

WRITE DATA INTO MEMORY

513

MEMORY READ CONTROL

501  /10  502  503  504

max_val
COUNTER
cntup
505

COUNTER
506

COUNTER
507

COUNTER
508

rd_str

en1  en2  en3  en4

CLK

509  510  511  512

61  62  63  64

P_DECI_CLK1  P_DESI_CLK2  P_DECI_CLK3  P_DECI_CLK4

# FIG.13

EP 4 757 339 A1

**FIG.14**

# FIG.15A

# FIG.15B

EP 4 757 339 A1

# FIG.16

EP 4 757 339 A1

# FIG.17A

EP 4 757 339 A1

# FIG.17B

EP 4 757 339 A1

# FIG.18A

# FIG.18B

# FIG.19A

9191

# FIG.19B

# FIG.19C

## INTERNATIONAL SEARCH REPORT

| International application No. |
| --- |
| **PCT/JP2024/026730** |

| A. | CLASSIFICATION OF SUBJECT MATTER |
| --- | --- |

*H04N 25/77*(2023.01)i; *H04N 25/707*(2023.01)i; *H04N 25/773*(2023.01)i
FI: H04N25/77; H04N25/707; H04N25/773

According to International Patent Classification (IPC) or to both national classification and IPC

| B. | FIELDS SEARCHED |
| --- | --- |

Minimum documentation searched (classification system followed by classification symbols)

H04N25/77; H04N25/707; H04N25/773

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2022-096472 A (CANON KABUSHIKI KAISHA) 29 June 2022 (2022-06-29) paragraphs [0091]-[0100], [0122], fig. 1, 9-10 | 1-3, 5-8, 22-23 |
| Y | | 4, 9 |
| A | | 10-21 |
| Y | JP 2016-167698 A (CANON KABUSHIKI KAISHA) 15 September 2016 (2016-09-15) paragraphs [0020]-[0021] | 4, 9 |
| A | US 2021/0319606 A1 (WISCONSIN ALUMNI RESEARCH FOUNDATION) 14 October 2021 (2021-10-14) entire text, all drawings | 1-23 |

☐ Further documents are listed in the continuation of Box C.　　☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **11 September 2024** | **01 October 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

International application No.

**PCT/JP2024/026730**

| Patent document cited in search report | | | Publication date (day/month/year) | Patent family member(s) | | | Publication date (day/month/year) |
|---|---|---|---|---|---|---|---|
| JP | 2022-096472 | A | 29 June 2022 | US | 2022/0201182 | A1 | |
| | | | | paragraphs [0107]-[0116], [0138], fig. 1, 9-10 | | | |
| JP | 2016-167698 | A | 15 September 2016 | US | 2016/0267677 | A1 | |
| | | | | paragraphs [0044]-[0045] | | | |
| | | | | EP | 3068130 | A1 | |
| | | | | CN | 105956989 | A | |
| US | 2021/0319606 | A1 | 14 October 2021 | (Family: none) | | | |

Form PCT/ISA/210 (patent family annex) (July 2022)

**REFERENCES CITED IN THE DESCRIPTION**

**Patent documents cited in the description**

- JP 2023123703 A

- JP 2024113102 A

**Non-patent literature cited in the description**

- **SHIGERU ANDO ; AKIRA KIMACHI**. Time Correlation Imaging and Its Applications. *Journal E of the Institute of Electrical Engineers of Japan*, 01 May 2009, vol. 129 (5), 129-137